# EUROPEAN PATENT APPLICATION

(11) **EP 4 637 187 A1**
(43) Date of publication of application: **22.10.2025**
(21) Application number: 23917695.1
(22) Date of filing: 12.12.2023
(51) Int. Cl.: H04S 7/00, H04R 3/00

(54) **SIGNAL REPRODUCTION DEVICE, SIGNAL REPRODUCTION METHOD, AND SIGNAL REPRODUCTION PROGRAM**

(30) Priority: 20.01.2023 JP 2023007558
(71) Applicant: Panasonic Intellectual Property Management Co., Ltd., Kadoma-shi, Osaka 571-0057 (JP)
(72) Inventor: KANO, Hiroyuki, Kadoma-shi, Osaka 571-0057 (JP)
(74) Representative: Grünecker Patent- und Rechtsanwälte PartG mbB
(86) International application number: PCT/JP2023/044373
(87) International publication number: WO 2024/154484

(57) **Abstract**

A signal reproduction apparatus includes first and second addition parts that add a right channel signal having an adjusted level and a left channel signal having an adjusted level, a head detection part that detects a position of a head of a listener, and an input switch part that makes switching of input states to a first loudspeaker and a second loudspeaker according to the detected position of the head of the listener between: a first input state in which the right channel signal is input to the first loudspeaker and the left channel signal is input to the second loudspeaker; a second input state in which an output signal from an addition part is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

## Description

### Technical Field

The present disclosure relates to a technology of reproducing a stereo sound at a position near a listener.

### Background Art

In recent years, a loudspeaker built-in seat that is provided with a loudspeaker to reproduce music has been put into practical use. In particular, in a case where a loudspeaker is installed in a headrest part of a seat, the loudspeaker is located near a head of a listener who sits on the seat, and a reproduced sound from the loudspeaker can thus be heard even if the level of the reproduced sound is not so high, which can suppress the sound leakage around the seat.

For example, in Patent Literature 1, a loudspeaker is provided near a head part of a seat, and additionally, a mesh cover member having an excellent sound transmission is used on a front of the loudspeaker, and a soundproofing member having an excellent sound insulation is used on a rear of the loudspeaker. This configuration enables an efficient audio output without leakage of the sound to the periphery.

Patent Literature 1 describes a method for installing a loudspeaker and a cover material for the seat in which the loudspeaker is installed, but does not describe an input signal to the loudspeaker at all. In other words, in Patent Literature 1, when a stereo signal is reproduced at loudspeakers, a left channel signal is reproduced at a left loudspeaker, and a right channel signal is reproduced at a right loudspeaker. This is an ordinary stereo reproduction.

The reproduction way in which the left channel signal and the right channel signal are respectively reproduced at the same level at the left loudspeaker and the right loudspeaker is on the presupposition that the sound is heard at a midpoint between the left loudspeaker and the right loudspeaker.

However, it is not inevitable that the head of a listener is always positioned at a midpoint between a left loudspeaker and a right loudspeaker. When keeping his/her head immobile at the same position for a long period of time, a listener is liable to feel uncomfortable for a neck pain, a shoulder pain, or the like. Therefore, it is usual that a listener faces forward for a certain period of time, the listener twists his/her neck or tilts his/her head when he/she feels fatigue on his/her neck or shoulder. In other words, we should consider that the head of a listener always moves.

In particular, a case where a listener listens to a stereo reproduction sound with his/her head tilted to the left or to the right deviates from the presupposition for the stereo reproduction that the sound is heard with the head positioned at a midpoint between a left loudspeaker and a right loudspeaker, and causes the likelihood that the listener cannot hear an appropriate stereo reproduction sound. For example, when the head of the listener has shifted to the position of the left loudspeaker, the left loudspeaker is in the immediate vicinity of the listener, and a reproduction sound from the left loudspeaker is liable to be loudly perceived by the listener. On the contrary, a distance from the right loudspeaker to the listener increases, and a reproduction sound from the right loudspeaker is liable to be too soft for the listener to hear.

In this way, it can be seen that when the head has shifted to the immediate vicinity of either one of the left loudspeaker and the right loudspeaker, a normal stereophonic sensation cannot be obtained, and further, the reproduction sound from the more distant loudspeaker is liable to be inaudible, causing thus the lack of information from the more distant loudspeaker.

### Citation List

### Patent Literature

Patent Literature 1: Japanese Unexamined Patent Publication No. 2006-271847

### Summary of Invention

The present disclosure has been worked out to solve the problems described above, and an object thereof is to provide a technology which enables a listener to hear all the information of a right channel signal and a left channel signal that are reproduced in accordance with a sound source even when the head of the listener is closer to one of a left loudspeaker and a right loudspeaker without the lack of the information from the other of the loudspeakers.

A signal reproduction apparatus according to the present disclosure includes a reproduction part that reproduces a right channel signal and a left channel signal in accordance with a sound source, a first level adjustment part that adjusts a level of the right channel signal reproduced by the reproduction part, a second level adjustment part that adjusts a level of the left channel signal reproduced by the reproduction part, an addition part that adds the right channel signal having been adjusted by the first level adjustment part and the left channel signal having been adjusted by the second level adjustment part, a detection part that detects a position of a head of a listener, and an input switch part that makes switching of input states to a first loudspeaker arranged near a right ear of the listener and a second loudspeaker arranged near a left ear of the listener according to the position of the head of the listener detected by the detection part between: a first input state in which the right channel signal is input to the first loudspeaker and the left channel signal is input to the second loudspeaker; a second input state in which an output signal from the addition part is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

According to the present disclosure, even when a head of a listener is closer to one of a left loudspeaker and a right loudspeaker, the listener can still hear all the information of a right channel signal and a left channel signal that are reproduced in accordance with a sound source without the lack of information from the other of the loudspeakers.

### Brief Description of Drawings

FIG. 1 is a diagram showing an exemplary configuration of a signal reproduction system when a head of a listener is in a first head state in Embodiment 1 of the present disclosure.
FIG. 2 is a diagram showing an exemplary configuration of the signal reproduction system immediately after the head of the listener has shifted from the first head state to a second head state in Embodiment 1 of the present disclosure.
FIG. 3 is a diagram showing a measurement of a first transmission characteristic and a second transmission characteristic when the head of the listener has shifted from the first head state to the second head state.
FIG. 4 is graphs showing exemplary first transmission characteristics measured in the first head state and the second head state, respectively, and an exemplary first difference characteristic.
FIG. 5 is graphs showing exemplary second transmission characteristics measured in the first head state and the second head state, respectively, and an exemplary second difference characteristic.
FIG. 6 is a diagram that illustrates a signal reproduction method in the second head state in which the head of the listener is closer to a second loudspeaker.
FIG. 7 is a diagram showing an exemplary configuration of the signal reproduction system when the head of the listener is in the second head state in Embodiment 1 of the present disclosure.
FIG. 8 is a diagram showing a measurement of a first transmission characteristic and a second transmission characteristic immediately after the head of the listener has shifted from the second head state to the first head state.
FIG. 9 is graphs showing an exemplary second transmission characteristic measured in the second head state, an exemplary second transmission characteristic measured immediately after the head has shifted from the second head state to the first head state, and an exemplary second difference characteristic.
FIG. 10 is graphs showing an exemplary first transmission characteristic measured in the second head state, an exemplary first transmission characteristic measured immediately after the head has shifted from the second head state to the first head state, and an exemplary first difference characteristic.
FIG. 11 is a diagram showing an exemplary configuration of the signal reproduction system immediately after the head of the listener has shifted from the first head state to a third head state in Embodiment 1 of the present disclosure.
FIG. 12 is graphs showing exemplary first transmission characteristics measured in the first head state and the third head state, and an exemplary first difference characteristic.
FIG. 13 is graphs showing exemplary second transmission characteristics measured in the first head state and the third head state, and an exemplary second difference characteristic.
FIG. 14 is a diagram showing an exemplary configuration of the signal reproduction system when the head of the listener is in the third head state in Embodiment 1 of the present disclosure.
FIG. 15 is a flowchart showing operations of the signal reproduction apparatus in Embodiment 1 of the present disclosure.
FIG. 16 is a first flowchart showing operations of a head detection part in Embodiment 1 of the present disclosure.
FIG. 17 is a second flowchart showing operations of the head detection part in Embodiment 1 of the present disclosure.
FIG. 18 is a third flowchart showing operations of the head detection part in Embodiment 1 of the present disclosure.
FIG. 19 is a chart showing a relationship between the first head state, the second head state, and the third head state in Embodiment 1.
FIG. 20 is a diagram showing exemplary memory regions of a first memory and a second memory in Embodiment 1.
FIG. 21 shows an exemplary configuration of a signal reproduction system when a head of a listener is in a first head state in Embodiment 2 of the present disclosure.
FIG. 22 shows an exemplary configuration of a signal reproduction system when a head of a listener is in a first head state in Embodiment 3 of the present disclosure.
FIG. 23 is graphs showing exemplary first transmission characteristics measured in the first head state before a head shifting and a second head state after the head shifting, and an exemplary first difference characteristic in Embodiment 3.
FIG. 24 is graphs showing exemplary second transmission characteristics measured in the first head state before the head shifting and in the second head state after the head shifting, and an exemplary second difference characteristic in Embodiment 3.
FIG. 25 is illustrations showing states of the head of a listener who sits on a loudspeaker built-in seat according to a conventional technology.
FIG. 26 is diagrams showing a signal reproduction method in the loudspeaker built-in seat according to a conventional technology.

### Description of Embodiments

### Knowledge Underlying the Present Disclosure

As described above, the conventional loudspeaker built-in seat is provided with loudspeakers in a left portion and a right portion of the headrest part of the seat, and reproduces a left channel signal and a right channel signal at the left loudspeaker and the right loudspeaker, respectively. Patent Literature 1 describes the use of the material having an excellent sound transmission for the cover member of the front of the loudspeaker, and on the contrary, the use of the material having an excellent sound insulation for the rear of the loudspeaker, and a method for installing the loudspeaker in the seat. However, Patent Literature 1 does not describe what signal is input to the left loudspeaker and the right loudspeaker.

In other words, Patent Literature 1 describes nothing about a technology of modifying signals to be input to the loudspeakers according to a state of the person who sits on the seat.

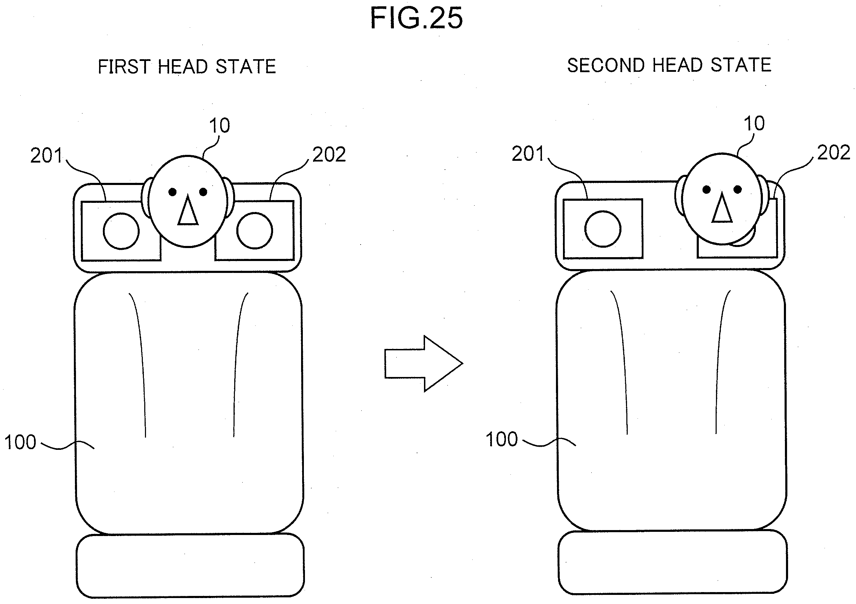

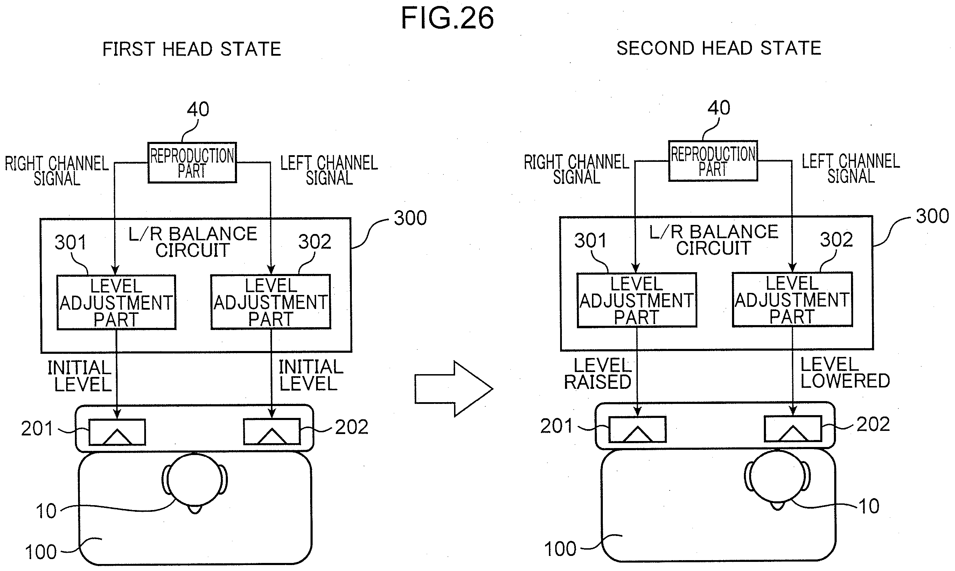

FIG. 25 includes illustrations showing states of the head of a listener 10 who sits on the loudspeaker built-in seat according to the conventional technology. FIG. 26 includes diagrams illustrating the signal reproduction method in the loudspeaker built-in seat according to the conventional technology.

First, when the listener 10 normally sits on a seat 100 as shown in the first head state in FIG. 25, the listener 10 has the head at a midpoint between a right loudspeaker 201 and a left loudspeaker 202 that are installed in the headrest. At this moment, as shown in the first head state in FIG. 26, levels of the right channel signal and the left channel signal that are reproduced by a reproduction part 40 such as a CD player are adjusted to the same initial level by level adjustment parts 301, 302 in an L/R balance circuit 300. Then, output signals from the level adjustment parts 301, 302 are reproduced in the right loudspeaker 201 and the left loudspeaker 202, respectively. In other words, the right channel signal and the left channel signal from a stereo sound source are reproduced at the same level in the right loudspeaker 201 and the left loudspeaker 202. The listener 10 can thus hear a sound that gives a normal stereophonic sensation.

However, when the listener 10 sits on the left side of the seat 100 as shown in the second head state in FIG. 25, the listener 10 has the head at a position closer to the left loudspeaker 202. In this case, the listener 10 perceives more loudly the left channel signal reproduced in the left loudspeaker 202, and on the contrary, perceives softer the right channel signal reproduced in the right loudspeaker 201. It is also possible that the right channel signal is not heard, and the left channel signal is perceived loudly.

This state of unbalance between the left and right sound volumes not only inhibits creation of the normal stereophonic sensation but might cause the lack of information of one of the channel signals (in this example, the right channel signal). Therefore, the level adjustment part 301 in the L/R balance circuit 300 raises the level of the right channel signal, and concurrently, the level adjustment part 302 lowers the level of the left channel signal as shown in a second head state in FIG. 26. Volumes of sounds to be reproduced in the right loudspeaker 201 and the left loudspeaker 202 are thus adjusted to correct the left-right unbalance perceived by the listener 10. This signal processing enables the listener 10 to resume hearing a sound giving the normal stereophonic sensation.

However, in this manner, for example, when the level adjustment part 301 raises the sound volume beyond an input tolerance of the right loudspeaker 201, this might distort a sound reproduced in the right loudspeaker 201 and prevent the output of a normal reproduced sound. Especially, a seat is often installed with a small loudspeaker due to physical constraints. Since a small loudspeaker generally has a low input tolerance, a reproduced sound is liable to be distorted.

Further, at the right loudspeaker 201 where the sound volume has been raised, the raised sound volume is liable to cause the leakage of the sound to the periphery and disturb the people therearound.

In the technology of Patent Literature 1, the use of the mesh cover member having an excellent sound transmission for the front of the backrest of the seat and the use of the soundproofing member for the rear of the loudspeaker facilitates the passage of the sound in front of the loudspeaker and hinders the passage of the sound behind the loudspeaker, respectively. Therefore, the reproduction at a low sound volume can be perceived as a sufficient sound volume by a listener in front of the loudspeaker and can concurrently prevent the sound leakage to the periphery of the seat.

However, the technology of Patent Literature 1 does not take into account a state where the head of the listener 10 is closer to the left loudspeaker 202 as shown in the second head state in FIG. 25. Thus, the technology cannot solve the problem that this state of unbalance between the left and right sound volumes fails to give the listener 10 a normal stereophonic sensation and causes to lack information of the right channel signal from the loudspeaker 201 more distant from the listener 10.

Further, the raising of the level of the right channel signal to be input to the loudspeaker 201 more distant from the listener 10 as shown in the second head state in FIG. 26 in an attempt to solve the problem is liable to cause the sound volume to exceed the input tolerance of the loudspeaker, leading to another problem of distortion in the reproduced sound.

Accordingly, the present inventors have intensively studied a technology that can prevent the lack of information contained in a channel signal at a loudspeaker more distant from a head of a listener, allow the sound to be heard at an original volume not exceeding an input tolerance of the loudspeaker, and further prevent the leakage of an unnecessary sound to the periphery thereof. As a result, the present inventors have worked out a technology according to each aspect of the present disclosure.

The following technology is disclosed to solve the problems described above.
(1) A signal reproduction apparatus according to an aspect of the present disclosure includes a reproduction part that reproduces a right channel signal and a left channel signal in accordance with a sound source, a first level adjustment part that adjusts a level of the right channel signal reproduced by the reproduction part, a second level adjustment part that adjusts a level of the left channel signal reproduced by the reproduction part, an addition part that adds the right channel signal having been adjusted by the first level adjustment part and the left channel signal having been adjusted by the second level adjustment part, a detection part that detects a position of a head of a listener, and an input switch part that makes switching of input states to a first loudspeaker arranged near a right ear of the listener and a second loudspeaker arranged near a left ear of the listener according to the position of the head of the listener detected by the detection part between: a first input state in which the right channel signal is input to the first loudspeaker and the left channel signal is input to the second loudspeaker; a second input state in which an output signal from the addition part is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

In this configuration, the input states to the first loudspeaker arranged near the right ear of the listener and the second loudspeaker arranged near the left ear of the listener can be switched according to the position of the head of the listener between: the first input state in which the right channel signal is input to the first loudspeaker and the left channel signal is input to the second loudspeaker; the second input state in which the output signal obtained by adding the right channel signal having the adjusted level and the left channel signal having the adjusted level is input to the second loudspeaker and both the right channel signal and the output signal are kept from being input to the first loudspeaker; and the third input state in which the output signal is input to the first loudspeaker and both the left channel signal and the output signal are kept from being input to the second loudspeaker.

For example, when the head of the listener is closer to the first loudspeaker, the output signal obtained by adding the right channel signal having the adjusted level and the left channel signal having the adjusted level is input to the first loudspeaker, and both the left channel signal and the output signal are kept from being input to the second loudspeaker. Further, for example, when the head of the listener is closer to the second loudspeaker, the output signal is input to the second loudspeaker, and both the right channel signal and the output signal are kept from being input to the first loudspeaker.

Therefore, even when the head of the listener is closer to one of the right loudspeaker and the left loudspeaker, the listener can hear all the information of the right channel signal and the left channel signal that are reproduced in accordance with the sound source without the lack of the information from the other of the loudspeakers.

(2) In the signal reproduction apparatus disclosed in the above (1), it may be appreciated that the detection part detects which position among a position between the first loudspeaker and the second loudspeaker, a position closer to the first loudspeaker, and a position closer to the second loudspeaker the head of the lister is at, and the input switch part switches to: the first input state when the head of the listener is at the position between the first loudspeaker and the second loudspeaker; the second input state when the head of the listener is at the position closer to the second loudspeaker; and the third input state when the head of the listener is at the position closer to the first loudspeaker.

In this configuration, when the head of the listener is at the position between the first loudspeaker and the second loudspeaker, the right channel signal is output from the first loudspeaker, and the left channel signal of the left channel is output from the second loudspeaker. Further, when the head of the listener is at the position closer to the second loudspeaker, the first loudspeaker outputs nothing, and the second loudspeaker outputs the output signal obtained by adding the right channel signal having the adjusted level and the left channel signal having the adjusted level. Further, when the head of the listener is at the position closer to the first loudspeaker, the first loudspeaker outputs the output signal obtained by adding the right channel signal having the adjusted level and the left channel signal having the adjusted level, and the second loudspeaker outputs nothing.

Therefore, even when the head of the listener is closer to the first loudspeaker, the output signal obtained by adding the right channel signal and the left channel signal is output from the first loudspeaker, enabling thus the listener to hear all the information of the right channel signal and the left channel signal. Further, in this case, the second loudspeaker outputs nothing, preventing thus the leakage of an unnecessary sound to the periphery and reducing the power consumption. Also, when the head of the listener is closer to the second loudspeaker, the output signal obtained by adding the right channel signal and the left channel signal is output from the second loudspeaker, enabling thus the listener to hear all the information of the right channel signal and the left channel signal. Further, in this case, the first loudspeaker outputs nothing, preventing thus the leakage of an unnecessary sound to the periphery and reducing the power consumption.

(3) In the signal reproduction apparatus disclosed in the above (1) or (2), it may be appreciated that the first level adjustment part lowers the level of the right channel signal, and the second level adjustment part lowers the level of the left channel signal.

In this configuration, the output signal obtained by adding the right channel signal having the lowered level and the left channel signal having the lowered level is input to the first loudspeaker or the second loudspeaker. Therefore, the output signal can be output from the loudspeaker at the original level without exceeding the input tolerance of the loudspeaker, preventing thus the leakage of an unnecessary sound to the periphery.

(4) In the signal reproduction apparatus disclosed in any of the above (1) to (3), the detection part may include: a first characteristic measurement section that measures a first transmission characteristic from the first loudspeaker to a first microphone arranged near the first loudspeaker using a first reproduced sound signal detected by the first microphone and the right channel signal reproduced by the reproduction part; a second characteristic measurement section that measures a second transmission characteristic from the second loudspeaker to a second microphone arranged near the second loudspeaker using a second reproduced sound signal detected by the second microphone and the left channel signal reproduced by the reproduction part; a memory that stores in advance a first transmission characteristic and a second transmission characteristic when the head of the listener is at the position between the first loudspeaker and the second loudspeaker as a first initial transmission characteristic and a second initial transmission characteristic, respectively; a first difference calculation section that calculates as a first difference characteristic a difference between a first transmission characteristic currently measured by the first characteristic measurement section and the first initial transmission characteristic stored in the memory; a second difference calculation section that calculates as the second difference characteristic a difference between a second transmission characteristic currently measured by the second characteristic measurement section and the second initial transmission characteristic stored in the memory; and a determination section that determines a position of the head of the listener on the basis of the first difference characteristic calculated by the first difference calculation section and the second difference characteristic calculated by the second difference calculation section.

In this configuration, the first transmission characteristic from the first loudspeaker to the first microphone and the second transmission characteristic from the second loudspeaker to the second microphone are measured. Further, the difference between the first transmission characteristic currently measured and the first initial transmission characteristic stored in advance in the memory is calculated as the first difference characteristic. Further, the difference between the second transmission characteristic currently measured and the second initial transmission characteristic stored in advance in the memory is calculated as the second difference characteristic. Then, a position of the head of the listener is determined on the basis of the calculated first difference characteristic and the calculated second difference characteristic.

Therefore, the position of the head of the listener can be determined on the basis of the first difference characteristic that is a difference between the first transmission characteristic currently measured from the first loudspeaker to the first microphone and the first initial transmission characteristic stored in advance in the memory, and the second difference characteristic that is a difference between the second transmission characteristic currently measured from the second loudspeaker to the second microphone and the second initial transmission characteristic stored in advance in the memory.

(5) In the signal reproduction apparatus disclosed in any one of the above (1) to (3), the detection part may include: a first characteristic measurement section that measures a first transmission characteristic from the first loudspeaker to a first microphone arranged near the first loudspeaker using a first reproduced sound signal detected by the first microphone and the right channel signal reproduced by the reproduction part; a second characteristic measurement section that measures a second transmission characteristic from the second loudspeaker to a second microphone arranged near the second loudspeaker using a second reproduced sound signal detected by the second microphone and the left channel signal reproduced by the reproduction part; a memory that stores the first transmission characteristic measured by the first characteristic measurement section and the second transmission characteristic measured by the second characteristic measurement section; a first difference calculation section that calculates as a first difference characteristic a difference between a first transmission characteristic currently measured by the first characteristic measurement section and a first transmission characteristic previously measured and stored in the memory; a second difference calculation section that calculates as the second difference characteristic a difference between a second transmission characteristic currently measured by the second characteristic measurement section and a second transmission characteristic previously measured and stored in the memory; and a determination section that determines a position of the head of the listener on the basis of the first difference characteristic calculated by the first difference calculation section and the second difference characteristic calculated by the second difference calculation section.

In this configuration, the first transmission characteristic from the first loudspeaker to the first microphone and the second transmission characteristic from the second loudspeaker to the second microphone are measured. Further, the difference between the first transmission characteristic currently measured and the first transmission characteristic previously measured and stored in the memory is calculated as the first difference characteristic. Further, the difference between the second transmission characteristic currently measured and the second transmission characteristic previously measured and stored in the memory is calculated as the second difference characteristic. Then, a position of the head of the listener is determined on the basis of the calculated first difference characteristic and the calculated second difference characteristic.

Therefore, the position of the head of the listener can be determined on the basis of the first difference characteristic that is a difference between the first transmission characteristic currently measured from the first loudspeaker to the first microphone and the first transmission characteristic previously measured and stored in the memory, and the second difference characteristic that is a difference between the second transmission characteristic currently measured from the second loudspeaker to the second microphone and the second transmission characteristic previously measured and stored in the memory.

(6) In the signal reproduction apparatus disclosed in the above (5), it may be appreciated that the determination section detects, when the head of the listener is at the position between the first loudspeaker and the second loudspeaker, a level at each of a plurality of frequency points in a predetermined frequency band for each of the first difference characteristic and the second difference characteristic; counts the number X of frequency points which have a positive level value and the number Y of frequency points which have a negative level value for each of the first difference characteristic and the second difference characteristic; determines that the head of the listener has moved from the position between the first loudspeaker and the second loudspeaker to the position closer to the first loudspeaker when the number X of the frequency points for the first difference characteristic is equal to or greater than a first threshold and the number Y of the frequency points for the second difference characteristic is equal to or greater than a second threshold; and determines that the head of the listener has moved from the position between the first loudspeaker and the second loudspeaker to the position closer to the second loudspeaker when the number X of the frequency points for the second difference characteristic is equal to or greater than the first threshold and the number Y of the frequency points for the first difference characteristic is equal to or greater than the second threshold.

In this configuration, it can be determined that the head of the listener has moved from the position between the first loudspeaker and the second loudspeaker to the position closer to the first loudspeaker when the first difference characteristic in the predetermined frequency band is greater than zero and the second difference characteristic in the predetermined frequency band is smaller than zero. Further, it can be determined that the head of the listener has moved from the position between the first loudspeaker and the second loudspeaker to the position closer to the first loudspeaker when the second difference characteristic in the predetermined frequency band is greater than zero and the first difference characteristic in the predetermined frequency band is smaller than zero.

(7) In the signal reproduction apparatus disclosed in the above (6), it may be appreciated that the first threshold is a value obtained by multiplying the number N of whole frequency points in the predetermined frequency band by a constant α, the second threshold is a value obtained by multiplying the number N of the whole frequency points in the predetermined frequency band by a constant β, and the constant α is an integer of 0.5 or more and 1 or less, and the constant β is an integer of 0.5 or more and 1 or less.

In this configuration, the first threshold and the second threshold that enable an accurate determination of a position of the head of the listener can be set by varying the values of the constant α and the constant β to be multiplied by the number N of the whole frequency points in the predetermined frequency band.

(8) In the signal reproduction apparatus disclosed in the above (5), the determination section may detect, when the head of the listener is at the position closer to the first loudspeaker, a level at each of a plurality of frequency points in a predetermined frequency band for the first difference characteristic, count the number Y of frequency points which have a negative level value for the first difference characteristic, and determine that the head of the listener has moved from the position closer to the first loudspeaker to the position between the first loudspeaker and the second loudspeaker when the number Y of the frequency points for the first difference characteristic is equal to or greater than a second threshold, and may detect, when the head of the listener is at the position closer to the second loudspeaker, a level at each of the frequency points in the predetermined frequency band for the second difference characteristic, count the number Y of frequency points which have a negative level value for the second difference characteristic, and determine that the head of the listener has moved from the position closer to the second loudspeaker to the position between the first loudspeaker and the second loudspeaker when the number Y of the frequency points for the second difference characteristic is equal to or greater than the second threshold.

In this configuration, it can be determined, when the head of the listener is at the position closer to the first loudspeaker, that the head of the listener has moved from the position closer to the first loudspeaker to the position between the first loudspeaker and the second loudspeaker in a case where the first difference characteristic in the predetermined frequency band is smaller than zero. Further, it can be determined, when the head of the listener is at the position closer to the second loudspeaker, that the head of the listener has moved from the position closer to the second loudspeaker to the position between the first loudspeaker and the second loudspeaker in a case where the second difference characteristic in the predetermined frequency band is smaller than zero.

(9) In the signal reproduction apparatus disclosed in the above (8), it may be appreciated that the second difference calculation section further calculates, when the head of the listener is at the position closer to the first loudspeaker, as the second difference characteristic a difference between the second transmission characteristic currently measured by the second characteristic measurement section and a second transmission characteristic when the head of the listener is at the position between the first loudspeaker and the second loudspeaker, the determination section further determines, when the head of the listener is at the position closer to the first loudspeaker, whether a level at every frequency for the second difference characteristic is lower than a third threshold, and determines that the head of the listener has moved from the position closer to the first loudspeaker to the position between the first loudspeaker and the second loudspeaker when the number Y of the frequency points for the first difference characteristic is equal to or greater than the second threshold and the a level at every frequency for the second difference characteristic is lower than the third threshold, the first difference calculation section further calculates, when the head of the listener is at the position closer to the second loudspeaker, as the first difference characteristic a difference between the first transmission characteristic currently measured by the first characteristic measurement section and a first transmission characteristic when the head of the listener is at the position between the first loudspeaker and the second loudspeaker, and the determination section further determines, when the head of the listener is at the position closer to the second loudspeaker, whether a level at every frequency for the first difference characteristic is lower than the third threshold, and determines that the head of the listener has moved from the position closer to the second loudspeaker to the position between the first loudspeaker and the second loudspeaker when the number Y of the frequency points for the second difference characteristic is equal to or greater than the second threshold and the level at every the frequency for the first difference characteristic is lower than the third threshold.

In this configuration, it can be more reliably determined, when the head of the listener is at the position closer to the first loudspeaker, whether the head of the listener has moved from the position closer to the first loudspeaker to the position between the first loudspeaker and the second loudspeaker by further determining whether the level at every frequency for the second difference characteristic is lower than the third threshold. Further, it can be more reliably determined, when the head of the listener is at the position closer to the second loudspeaker, whether the head of the listener has moved from the position closer to the second loudspeaker to the position between the first loudspeaker and the second loudspeaker by further determining whether the level at every frequency for the first difference characteristic is lower than the third threshold.

(10) In the signal reproduction apparatus disclosed in any one of the above (1) to (3), the detection part may include: an image acquisition section that acquires a photographed image of the head of the listener; and a determination section that determines a position of the head of the listener by analyzing the image.

In this configuration, a position of the head of the listener can be determined on the basis of the photographed image of the head of the listener.

Further, the present disclosure may be accomplished not only as the signal reproduction apparatus including the characteristic configuration described above, but also as a signal reproduction method for executing a characteristic process corresponding to the characteristic configuration included in the signal reproduction apparatus. Additionally, the present disclosure may be accomplished as a computer program causing a computer to execute the characteristic process included in the signal reproduction method. Therefore, the same advantageous effects as the signal reproduction apparatus can also be established in the following other aspects.

(11) A signal reproduction method according to another aspect of the present disclosure is a signal reproduction method by a computer, and includes: reproducing a right channel signal and a left channel signal in accordance with a sound source; adjusting a level of the reproduced right channel signal; adjusting a level of the reproduced left channel signal; adding the right channel signal having the adjusted level and the left channel signal having the adjusted level; detecting a position of a head of a listener; and making switching of input states to a first loudspeaker arranged near a right ear of the listener and a second loudspeaker arranged near a left ear of the listener according to the detected position of the head of the listener between: a first input state in which the right channel signal is input to the first loudspeaker and the left channel signal is input to the second loudspeaker; a second input state in which an output signal obtained by the addition is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

(12) A signal reproduction program according to a still another aspect of the present disclosure causes a computer to function as: a reproduction part that reproduces a right channel signal and a left channel signal in accordance with a sound source; a first level adjustment part that adjusts a level of the right channel signal reproduced by the reproduction part; a second level adjustment part that adjusts a level of the left channel signal reproduced by the reproduction part; an addition part that adds the right channel signal having been adjusted by the first level adjustment part and the left channel signal having been adjusted by the second level adjustment part; a detection part that detects a position of a head of a listener; and an input switch part that makes switching of input states to a first loudspeaker arranged near a right ear of the listener and a second loudspeaker arranged near a left ear of the listener according to the position of the head of the listener detected by the detection part between: a first input state in which the right channel signal is input to the first loudspeaker and the left channel signal is input to the second loudspeaker; a second input state in which an output signal from the addition part is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

(13) A non-transitory computer-readable recording medium according to still another aspect of the present disclosure which records the signal reproduction program causes a computer to function as: a reproduction part that reproduces a right channel signal and a left channel signal in accordance with a sound source; a first level adjustment part that adjusts a level of the right channel signal reproduced by the reproduction part; a second level adjustment part that adjusts a level of the left channel signal reproduced by the reproduction part; an addition part that adds the right channel signal having been adjusted by the first level adjustment part and the left channel signal having been adjusted by the second level adjustment part; a detection part that detects a position of a head of a listener; and an input switch part that makes switching of input states to a first loudspeaker arranged near a right ear of the listener and a second loudspeaker arranged near a left ear of the listener according to the position of the head of the listener detected by the detection part between: a first input state in which the right channel signal is input to the first loudspeaker and the left channel signal is input to the second loudspeaker; a second input state in which an output signal from the addition part is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

Hereinafter, embodiments of the present disclosure are described with reference to the accompanied drawings. In addition, each of embodiments described below shows a specific example of the present disclosure. Numerical values, shapes, elements, steps, order of steps, and the like that are indicated in the following embodiments are merely examples, and are not intended to delimit the present disclosure. Also, among the elements in the following embodiments, elements not recited in the independent claims representing the broadest concepts are described as optional elements. In all the embodiments, the respective contents may also be combined.

### Embodiment 1

A configuration of a signal reproduction system in Embodiment 1 of the present disclosure is described below.

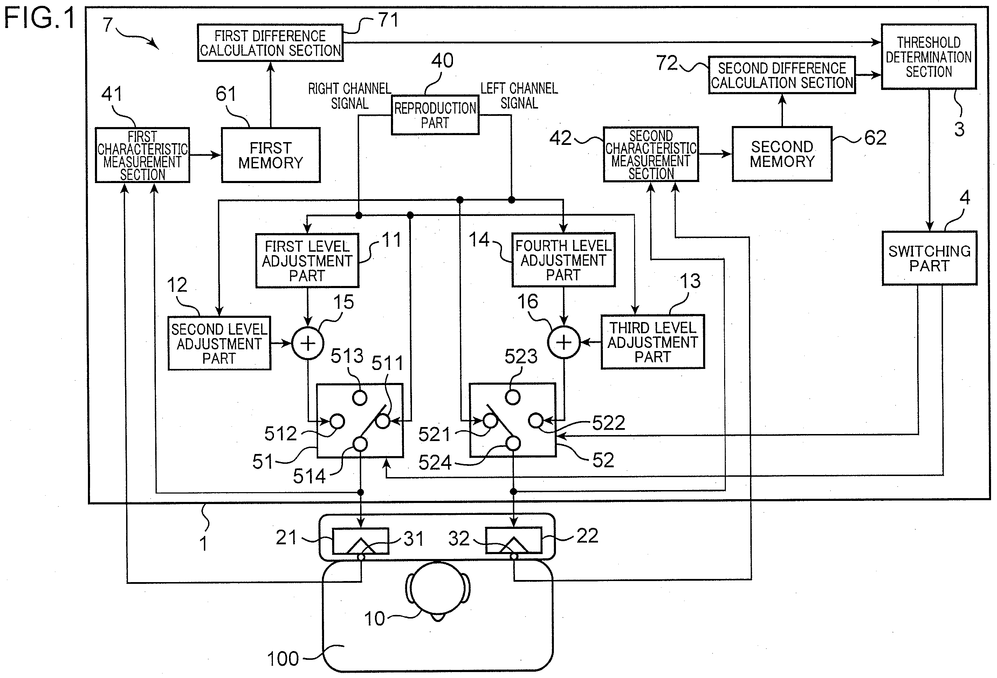

FIG. 1 is a diagram showing an exemplary configuration of a signal reproduction system when a head of a listener 10 is in a first head state in Embodiment 1 of the present disclosure. The first head state means a state in which the head of the listener 10 is at a position between a first loudspeaker 21 and a second loudspeaker 22, and particularly indicates a state in which the head of the listener 10 is at a midpoint between the first loudspeaker 21 and the second loudspeaker 22.

The signal reproduction system shown in FIG. 1 includes a signal reproduction apparatus 1, the first loudspeaker 21, the second loudspeaker 22, a first microphone 31, and a second microphone 32.

The first loudspeaker 21 and the second loudspeaker 22 are installed in a headrest part of a seat 100 where the listener 10 sits on. The first loudspeaker 21 is arranged near a right ear of the listener 10. The second loudspeaker 22 is arranged near a left ear of the listener 10. The first microphone 31 is arranged near the first loudspeaker 21. The second microphone 32 is arranged near the second loudspeaker 22.

The signal reproduction apparatus 1 includes a first level adjustment part 11, a second level adjustment part 12, a third level adjustment part 13, a fourth level adjustment part 14, a first addition part 15, a second addition part 16, a reproduction part 40, a first switch 51, a second switch 52, a head detection part 7, and a switching part 4.

The head detection part 7 includes a first characteristic measurement section 41, a second characteristic measurement section 42, a first memory 61, a second memory 62, a first difference calculation section 71, a second difference calculation section 72, and a threshold determination section 3.

The first level adjustment part 11, the second level adjustment part 12, the third level adjustment part 13, the fourth level adjustment part 14, the first addition part 15, the second addition part 16, the reproduction part 40, the first switch 51, the second switch 52, the switching part 4, the first characteristic measurement section 41, the second characteristic measurement section 42, the first difference calculation section 71, the second difference calculation section 72, and the threshold determination section 3 are implemented by a processor. The processor includes, for example, a Central Processing Unit (CPU).

Each of the first memory 61 and the second memory 62 includes, for example, a storage device that stores a variety of information. The storage device includes, for example, RAM (Random Access Memory), HDD (Hard Disk Drive), SSD (Solid State Drive), or Flash Memory.

The first level adjustment part 11, the second level adjustment part 12, the third level adjustment part 13, the fourth level adjustment part 14, the first addition part 15, the second addition part 16, the reproduction part 40, the first switch 51, the second switch 52, the head detection part 7, and the switching part 4 may be implemented by a dedicated hardware circuit. Further, the first level adjustment part 11, the second level adjustment part 12, the third level adjustment part 13, the fourth level adjustment part 14, the first addition part 15, the second addition part 16, the reproduction part 40, the first switch 51, the second switch 52, the head detection part 7, and the switching part 4 may be dispersed in a plurality of computers.

The reproduction part 40 reproduces a right channel signal and a left channel signal in accordance with a sound source. The right channel signal is an audio signal to be heard by the right ear of the listener 10, and the left channel signal is an audio signal to be heard by the left ear of the listener 10. The sound source includes, for example, an optical disc such as a CD (Compact Disc). The reproduction part 40 reproduces the right channel signal and the left channel signal that are stored in the optical disc.

The reproduction part 40 may reproduce the right channel signal and the left channel signal that are stored in the memory. The reproduction part 40 may reproduce the right channel signal and the left channel signal that are received from an external server. The reproduction part 40 may reproduce the right channel signal and the left channel signal that are received by a terminal device, e.g., a smartphone.

The reproduction part 40 outputs the right channel signal to the first level adjustment part 11, the third level adjustment part 13, and a first terminal 511 of the first switch 51. Further, the reproduction part 40 outputs the left channel signal to the second level adjustment part 12, the fourth level adjustment part 14, and a first terminal 521 of the second switch 52.

The first level adjustment part 11 adjusts a level of the right channel signal reproduced by the reproduction part 40. The first level adjustment part 11 lowers the level of the right channel signal. For example, the first level adjustment part 11 cuts the level of the right channel signal in half.

The second level adjustment part 12 adjusts a level of the left channel signal reproduced by the reproduction part 40. The second level adjustment part 12 lowers the level of the left channel signal. For example, the second level adjustment part 12 cuts the level of the left channel signal in half.

The third level adjustment part 13 adjusts a level of the right channel signal reproduced by the reproduction part 40. The third level adjustment part 13 lowers the level of the right channel signal. For example, the third level adjustment part 13 cuts the level of the right channel signal in half.

The fourth level adjustment part 14 adjusts a level of the left channel signal reproduced by the reproduction part 40. The fourth level adjustment part 14 lowers the level of the left channel signal. For example, the fourth level adjustment part 14 cuts the level of the left channel signal in half.

The first addition part 15 adds the right channel signal having been adjusted by the first level adjustment part 11 and the left channel signal having been adjusted by the second level adjustment part 12. The first addition part 15 outputs an addition signal obtained by adding the right channel signal having the adjusted level and the left channel signal having the adjusted level to a second terminal 512 of the first switch 51.

The second addition part 16 adds the right channel signal having been adjusted by the third level adjustment part 13 and the left channel signal having been adjusted by the fourth level adjustment part 14. The second addition part 16 outputs an addition signal obtained by adding the right channel signal having the adjusted level and the left channel signal having the adjusted level to a second terminal 522 of the second switch 52.

Although the signal reproduction apparatus 1 in Embodiment 1 includes the first level adjustment part 11, the second level adjustment part 12, the third level adjustment part 13, the fourth level adjustment part 14, the first addition part 15, and the second addition part 16, the present disclosure is not limited thereto. The signal reproduction apparatus 1 may include only the first level adjustment part 11, the second level adjustment part 12, and the first addition part 15, and may not include either the third level adjustment part 13, the fourth level adjustment part 14, or the second addition part 16. In this case, the first addition part 15 may output an addition signal obtained by adding the right channel signal having the adjusted level and the left channel signal having the adjusted level to the second terminal 512 of the first switch 51 and the second terminal 522 of the second switch 52.

The head detection part 7 detects a position of the head of the listener 10. The head detection part 7 detects which position among the position between the first loudspeaker 21 and the second loudspeaker 22, the position closer to the first loudspeaker 21, and the position closer to the second loudspeaker 22 the head of the listener 10 is at.

The switching part 4 makes switching of input states to the first loudspeaker 21 and the second loudspeaker 22 according to the position of the head of the listener 10 detected by the head detection part 7 between: a first input state in which the right channel signal is input to the first loudspeaker 21 and the left channel signal is input to the second loudspeaker 22; a second input state in which an output signal from the second addition part 16 is input to the second loudspeaker 22 and both the right channel signal and the output signal from the first addition part 15 are kept from being input to the first loudspeaker 21; and a third input state in which the output signal from the first addition part 15 is input to the first loudspeaker 21 and both the left channel signal and the output signal are kept from being input to the second loudspeaker 22. The switching part 4 controls the first switch 51 and the second switch 52 according to the position of the head of the listener 10 detected by the head detection part 7.

The switching part 4 switches to the first input state when the head of the listener 10 is at the position between the first loudspeaker 21 and the second loudspeaker 22. The switching part 4 switches to the second input state when the head of the listener 10 is at the position closer to the second loudspeaker 22. The switching part 4 switches to the third input state when the head of the listener 10 is at the position closer to the first loudspeaker 21.

In the first input state, the first switch 51 inputs the right channel signal to the first loudspeaker 21. In the second input state, the first switch 51 does not input either the right channel signal or the output signal from the first addition part 15 to the first loudspeaker 21. In the third input state, the first switch 51 inputs the output signal from the first addition part 15 to the first loudspeaker 21.

In the first input state, the second switch 52 inputs the left channel signal to the second loudspeaker 22. In the second input state, the second switch 52 inputs the output signal from the second addition part 16 to the second loudspeaker 22. In the third input state, the second switch 52 does not input either the left channel signal or the output signal from the second addition part 16 to the second loudspeaker 22.

The first switch 51 includes the first terminal 511, the second terminal 512, a third terminal 513, and a fourth terminal 514. The first terminal 511 is connected to the reproduction part 40. A right channel signal that is output from the reproduction part 40 is input to the first terminal 511. The second terminal 512 is connected to the first addition part 15. An output signal that is output from the first addition part 15 is input to the second terminal 512. The third terminal 513 is connected neither to the reproduction part 40 nor to the first addition part 15. The fourth terminal 514 is connected to both the first loudspeaker 21 and the first characteristic measurement section 41.

The fourth terminal 514 is connected to the first terminal 511; the second terminal 512; or the third terminal 513. When the fourth terminal 514 is connected to the first terminal 511, the right channel signal from the reproduction part 40 is output to both the first loudspeaker 21 and the first characteristic measurement section 41. When the fourth terminal 514 is connected to the second terminal 512, the output signal that is output from the first addition part 15 is output to both the first loudspeaker 21 and the first characteristic measurement section 41. When the fourth terminal 514 is connected to the third terminal 513, the right channel signal from the reproduction part 40 and the output signal from the first addition part 15 are kept from being output to the first loudspeaker 21 and the first characteristic measurement section 41.

The second switch 52 includes the first terminal 521, the second terminal 522, a third terminal 523, and a fourth terminal 524. The first terminal 521 is connected to the reproduction part 40. The left channel signal that is output from the reproduction part 40 is input to the first terminal 521. The second terminal 522 is connected to the second addition part 16. An output signal that is output from the second addition part 16 is input to the second terminal 522. The third terminal 523 is connected neither to the reproduction part 40 nor to the second addition part 16. The fourth terminal 524 is connected to both the second loudspeaker 22 and the second characteristic measurement section 42.

The fourth terminal 524 is connected to: the first terminal 521; the second terminal 522; or the third terminal 523. When the fourth terminal 524 is connected to the first terminal 521, the left channel signal from the reproduction part 40 is output to both the second loudspeaker 22 and the second characteristic measurement section 42. When the fourth terminal 524 is connected to the second terminal 522, the output signal that is output from the second addition part 16 is input to both the second loudspeaker 22 and the second characteristic measurement section 42. When the fourth terminal 524 is connected to the third terminal 523, the left channel signal from the reproduction part 40 and the output signal from the second addition part 16 are kept from being output to the second loudspeaker 22 and the second characteristic measurement section 42.

The first characteristic measurement section 41 measures a first transmission characteristic from the first loudspeaker 21 to the first microphone 31 arranged near the first loudspeaker 21 using a first reproduced sound signal detected by the first microphone 31 and an output signal (corresponding to the right channel signal reproduced by the reproduction part 40 in FIG. 1) from the fourth terminal 514 of the first switch 51.

The second characteristic measurement section 42 measures a second transmission characteristic from the second loudspeaker 22 to the second microphone 32 arranged near the second loudspeaker 22 using a second reproduced sound signal detected by the second microphone 32 and an output signal (corresponding to the left channel signal reproduced by the reproduction part 40 in FIG. 1) from the fourth terminal 524 of the second switch 52.

The first memory 61 stores in advance a first transmission characteristic when the head of the listener 10 is at the position between the first loudspeaker 21 and the second loudspeaker 22 as a first initial transmission characteristic.

The second memory 62 stores in advance a second transmission characteristic when the head of the listener 10 is at the position between the first loudspeaker 21 and the second loudspeaker 22 as a second initial transmission characteristic.

The first difference calculation section 71 calculates as a first difference characteristic a difference between a first transmission characteristic currently measured by the first characteristic measurement section 41 and the first initial transmission characteristic stored in the first memory 61.

The second difference calculation section 72 calculates as a second difference characteristic a difference between a second transmission characteristic currently measured by the second characteristic measurement section 42 and the second initial transmission characteristic stored in the second memory 62.

The first memory 61 may store the first transmission characteristic measured by the first characteristic measurement section 41. The second memory 62 may store the second transmission characteristic measured by the second characteristic measurement section 42. The first difference calculation section 71 may calculate as the first difference characteristic a difference between a first transmission characteristic currently measured by the first characteristic measurement section 41 and a first transmission characteristic previously measured and stored in the first memory 61. The second difference calculation section 72 may calculate as the second difference characteristic a difference between a second transmission characteristic currently measured by the second characteristic measurement section 42 and a second transmission characteristic previously measured and stored in the second memory 62.

The threshold determination section 3 determines a position of the head of the listener 10 on the basis of the first difference characteristic calculated by the first difference calculation section 71 and the second difference characteristic calculated by the second difference calculation section 72.

The threshold determination section 3 detects, when the head of the listener 10 is at the position between the first loudspeaker 21 and the second loudspeaker 22, a level at each of a plurality of frequency points in a predetermined frequency band for each of the first difference characteristic and the second difference characteristic. The threshold determination section 3 counts the number X of frequency points which have a positive level value and the number Y of frequency points which have a negative level value for each of the first difference characteristic and the second difference characteristic. The threshold determination section 3 determines that the head of the listener 10 has moved from the position between the first loudspeaker 21 and the second loudspeaker 22 to the position closer to the first loudspeaker 21 when the number X of the frequency points for the first difference characteristic is equal to or greater than a first threshold and the number Y of the frequency points for the second difference characteristic is equal to or greater than a second threshold. Further, the threshold determination section 3 determines that the head of the listener 10 has moved from the position between the first loudspeaker 21 and the second loudspeaker 22 to the position closer to the second loudspeaker 22 when the number X of the frequency points for the second difference characteristic is equal to or greater than the first threshold and the number Y of the frequency points for the first difference characteristic is equal to or greater than the second threshold.

The first threshold is a value obtained by multiplying the number N of whole frequency points in the predetermined frequency band by a constant α. The second threshold is a value obtained by multiplying the number N of the whole frequency points in the predetermined frequency band by a constant β. The constant α is an integer of 0.5 or more and 1 or less. The constant β is an integer of 0.5 or more and 1 or less.

The threshold determination section 3 detects, when the head of the listener 10 is at the position closer to the first loudspeaker 21, a level at each of a plurality of frequency points in a predetermined frequency band for the first difference characteristic. The threshold determination section 3 counts the number Y of frequency points which have a negative level value for the first difference characteristic. The threshold determination section 3 determines that the head of the listener 10 has moved from the position closer to the first loudspeaker 21 to the position between the first loudspeaker 21 and the second loudspeaker 22 when the number Y of the frequency points for the first difference characteristic is equal to or greater than the second threshold.

The threshold determination section 3 detects, when the head of the listener 10 is at the position closer to the second loudspeaker 22, a level at each of the frequency points in the predetermined frequency band for the second difference characteristic. The threshold determination section 3 counts the number Y of frequency points which have a negative level value for the second difference characteristic. The threshold determination section 3 determines that the head of the listener 10 has moved from the position closer to the second loudspeaker 22 to the position between the first loudspeaker 21 and the second loudspeaker 22 when the number Y of the frequency points for the second difference characteristic is equal to or greater than the second threshold.

The second difference calculation section 72 may further calculate, when the head of the listener 10 is at the position closer to the first loudspeaker 21, as the second difference characteristic a difference between the second transmission characteristic currently measured by the second characteristic measurement section 42 and a second transmission characteristic when the head of the listener 10 is at the position between the first loudspeaker 21 and the second loudspeaker 22. The threshold determination section 3 may further determine, when the head of the listener 10 is at the position closer to the first loudspeaker 21, whether a level at every frequency for the second difference characteristic is lower than a third threshold. Further, the threshold determination section 3 may determine that the head of the listener 10 has moved from the position closer to the first loudspeaker 21 to the position between the first loudspeaker 21 and the second loudspeaker 22 when the number Y of the frequency points for the first difference characteristic is equal to or greater than the second threshold and the level at every frequency for the second difference characteristic is lower than the third threshold.

The first difference calculation section 71 may further calculate, when the head of the listener 10 is at the position closer to the second loudspeaker 22, as the first difference characteristic a difference between the first transmission characteristic currently measured by the first characteristic measurement section 41 and a first transmission characteristic when the head of the listener 10 is at the position between the first loudspeaker 21 and the second loudspeaker 22. The threshold determination section 3 may further determine, when the head of the listener 10 is at the position closer to the second loudspeaker 22, whether a level at every frequency for the first difference characteristic is lower than the third threshold. The threshold determination section 3 may determine that the head of the listener 10 has moved from the position closer to the second loudspeaker 22 to the position between the first loudspeaker 21 and the second loudspeaker 22 when the number Y of the frequency points for the second difference characteristic is equal to or greater than the second threshold and the level at every frequency for the first difference characteristic is lower than the third threshold.

First, the first head state in which the head of the listener 10 is at the position between the first loudspeaker 21 and the second loudspeaker 22 is described below.

FIG. 1 shows the first head state in which the listener 10 sits on the seat 100 normally and the head of the listener 10 is at the position between the first loudspeaker 21 and the second loudspeaker 22. At this moment, the right channel signal from the reproduction part 40 is input to the first loudspeaker 21 passing through the first terminal 511 and the fourth terminal 514 of the first switch 51. A reproduced sound of the right channel signal is detected by the first microphone 31 and is input to the first characteristic measurement section 41. The first characteristic measurement section 41 is also input with the right channel signal that is from the reproduction part 40 and passes through the first switch 51. Therefore, the first characteristic measurement section 41 measures a first transmission characteristic from the first loudspeaker 21 to the first microphone 31 on the basis of a first reproduced sound signal detected by the first microphone 31 and the right channel signal from the reproduction part 40, and stores the measured first transmission characteristic in the first memory 61 as a first transmission characteristic in the first head state.

In parallel with the right channel signal, the left channel signal from the reproduction part 40 is input to the second loudspeaker 22 passing through the first terminal 521 and the fourth terminal 524 of the second switch 52. A reproduced sound of the left channel signal is detected by the second microphone 32 and is input to the second characteristic measurement section 42. The second characteristic measurement section 42 is also input with the left channel signal that is from the reproduction part 40 and passes through the second switch 52. Therefore, the second characteristic measurement section 42 measures a second transmission characteristic from the second loudspeaker 22 to the second microphone 32 on the basis of a second reproduced sound signal detected by the second microphone 32 and the left channel signal from the reproduction part 40, and stores the measured second transmission characteristic in the second memory 62 as a second transmission characteristic in the first head state.

Next, the description is made about a case that the head of the listener 10 has moved from the position between the first loudspeaker 21 and the second loudspeaker 22 to the position closer to the second loudspeaker 22.

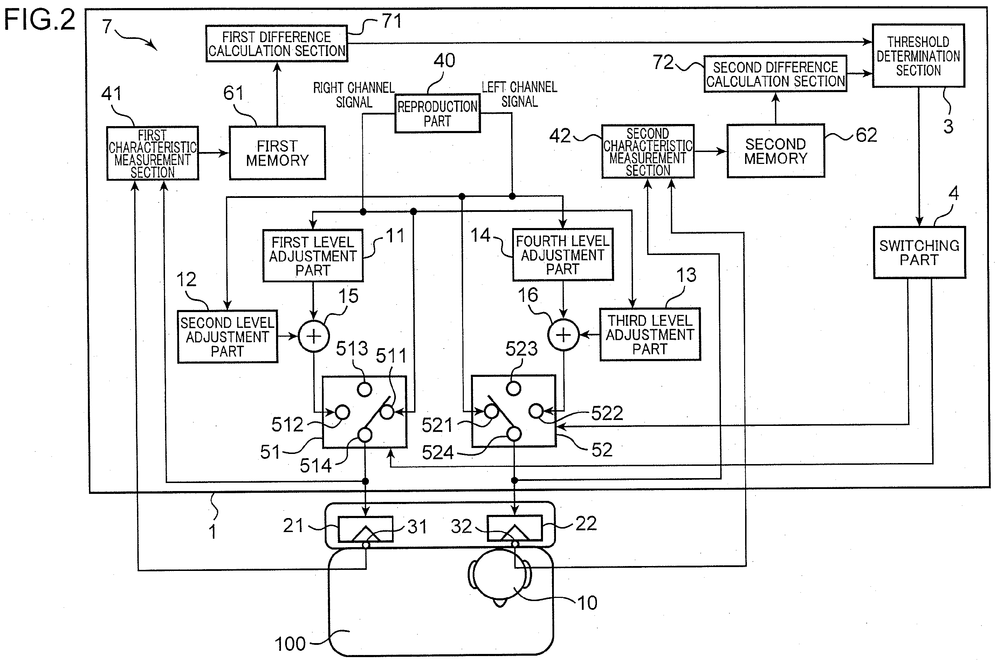

FIG. 2 is a diagram showing the exemplary configuration of the signal reproduction system immediately after the head of the listener 10 has shifted from the first head state to a second head state in Embodiment 1 of the present disclosure. The second head state means a state in which the head of the listener 10 is at the position closer to the second loudspeaker 22.

FIG. 2 shows, as an exemplary movement of the head of the listener 10, the second head state in which the head of the listener 10 has moved closer to the second loudspeaker 22. At this moment, the right channel signal from the reproduction part 40 is input to the first loudspeaker 21 passing through the first terminal 511 and the fourth terminal 514 of the first switch 51 in the same manner as in FIG. 1. A reproduced sound of the right channel signal is detected by the first microphone 31 and is input to the first characteristic measurement section 41. The first characteristic measurement section 41 is also input with the right channel signal that is from the reproduction part 40 and passes through the first switch 51. Therefore, the first characteristic measurement section 41 measures a first transmission characteristic from the first loudspeaker 21 to the first microphone 31 on the basis of a first reproduced sound signal detected by the first microphone 31 and the right channel signal from the reproduction part 40, and stores the measured first transmission characteristic in the first memory 61 as a first transmission characteristic in the second head state.

The left channel signal from the reproduction part 40 is input to the second loudspeaker 22 passing through the first terminal 521 and the fourth terminal 524 of the second switch 52 in the same manner as in FIG. 1. A reproduced sound of the left channel signal is detected by the second microphone 32 and is input to the second characteristic measurement section 42. The second characteristic measurement section 42 is also input with the left channel signal that is from the reproduction part 40 and passes through the second switch 52. Therefore, the second characteristic measurement section 42 measures a second transmission characteristic from the second loudspeaker 22 to the second microphone 32 on the basis of a second reproduced sound signal detected by the second microphone 32 and the left channel signal from the reproduction part 40, and stores the measured second transmission characteristic in the second memory 62 as a second transmission characteristic in the second head state.

The first transmission characteristics in the first head state and the second head state are stored in different regions in the first memory 61. In other words, the first transmission characteristic is not overwritten. The second transmission characteristics in the first head state and the second head state are stored in different regions in the second memory 62. In other words, the second transmission characteristic is not overwritten.

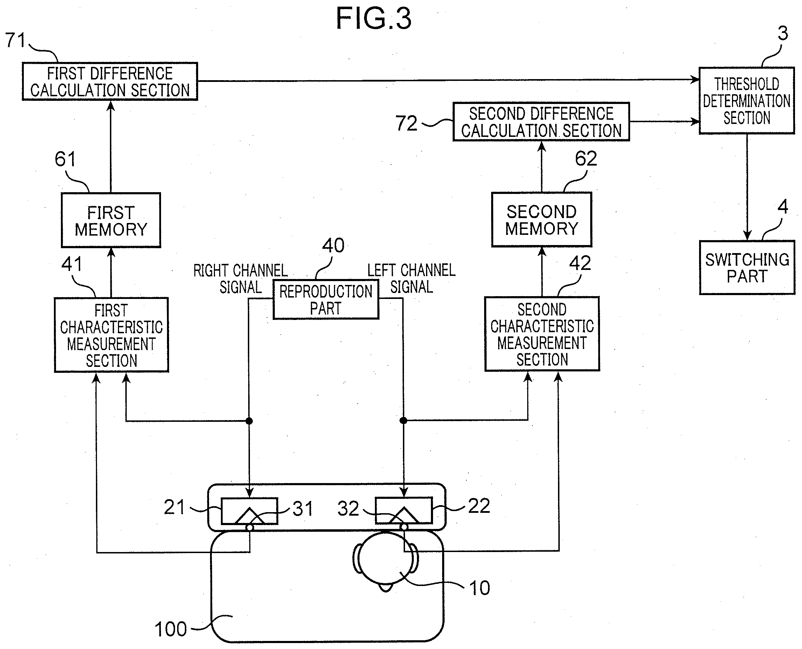

FIG. 3 is a diagram showing a measurement of a first transmission characteristic and a second transmission characteristic when the head of the listener has shifted from the first head state to the second head state.

The measurement of the first transmission characteristic and the second transmission characteristic in FIG. 2 is more concisely represented in FIG. 3. In FIG. 3, the following elements having no direct connection with the measurement of the first transmission characteristic and the second transmission characteristic are omitted: the first level adjustment part 11; the second level adjustment part 12; the third level adjustment part 13; the fourth level adjustment part 14; the first addition part 15; and the second addition part 16. Further, in FIG.3, the first terminal 511 and the fourth terminal 514 of the first switch 51 are connected, and the first terminal 521 and the fourth terminal 524 of the second switch 52 are connected.

As can be seen from FIG. 3, the first transmission characteristic from the first loudspeaker 21 to the first microphone 31 is measured using the right channel signal from the reproduction part 40, and similarly, the second transmission characteristic from the second loudspeaker 22 to the second microphone 32 is measured using the left channel signal from the reproduction part 40. At this moment, since the first microphone 31 is arranged near the first loudspeaker 21, a reproduced sound from the first loudspeaker 21 detected by the first microphone 31 is louder. Similarly, since the second microphone 32 is arranged near the second loudspeaker 22, a reproduced sound from the second loudspeaker 22 detected by the second microphone 32 is louder.

In other words, since a level of a crosstalk sound from the first loudspeaker 21 to the second microphone 32 and a level of a crosstalk sound from the second loudspeaker 22 to the first microphone 31 are negligible, the first characteristic measurement section 41 can measure the first transmission characteristic using only the right channel signal, and the second characteristic measurement section 42 can measure the second transmission characteristic using only the left channel signal.

In a case where the measurement of a first transmission characteristic and a second transmission characteristic is performed using music signals, since a level of a music signal at a frequency varies constantly, a longer period of time is required for the measurement than measurement signals like a white noise. However, if a sufficiently long period of time is secured and the averaging is performed, the necessary characteristics can be obtained. Further, the first difference calculation section 71 calculates a difference characteristic between a first transmission characteristic in the first head state and a first transmission characteristic in the second head state, and the threshold determination section 3 determines whether the difference characteristic exceeds a threshold. This process is more specifically described later. A difference characteristic is determined similarly for the second transmission characteristic. Therefore, even for signals whose level at each frequency is variable unlike flat signals over the frequencies like the white noise, a difference characteristic can be relatively accurately calculated.

Thus, in a case where the reproduction part 40 is a CD player, while the listener 10 listens to the music, simultaneously the first characteristic measurement section 41 and the second characteristic measurement section 42 can measure a first transmission characteristic between the first loudspeaker 21 and the first microphone 31 and a second transmission characteristic between the second loudspeaker 22 and the second microphone 32.

Further, the first transmission characteristic from the first loudspeaker 21 to the first microphone 31 stored in the first memory 61 is input to the first difference calculation section 71, and the second transmission characteristic from the second loudspeaker 22 to the second microphone 32 stored in the second memory 62 is input to the second difference calculation section 72 to thereby calculate a first difference characteristic and a second difference characteristic. Further, the threshold determination section 3 determines whether the first difference characteristic and the second difference characteristic meet certain conditions, and the first switch 51 and the second switch 52 are operated according to a result of the determination.

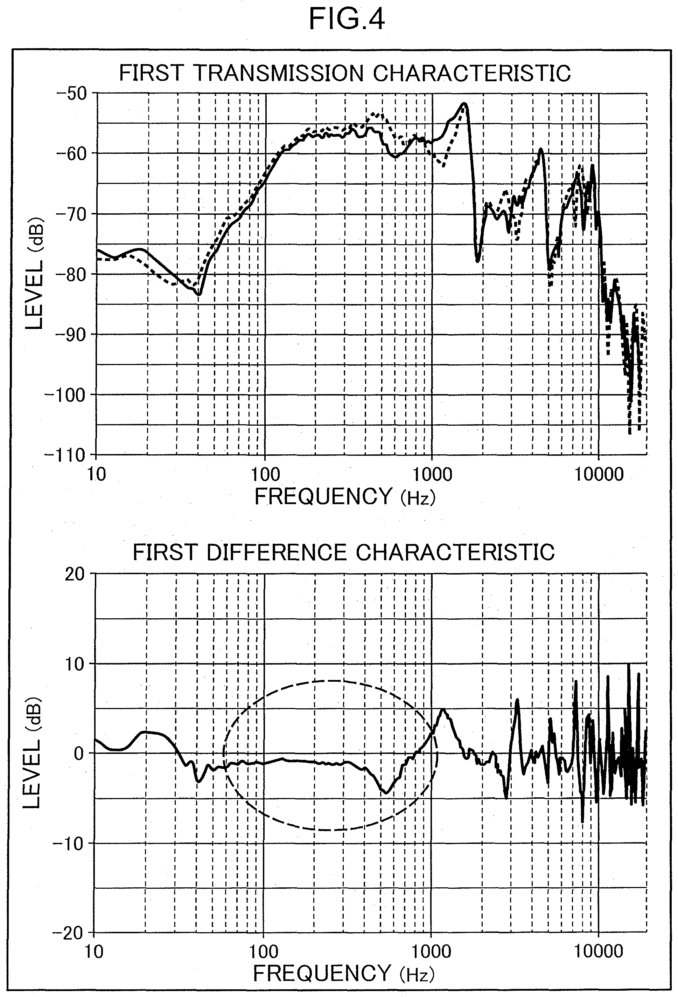

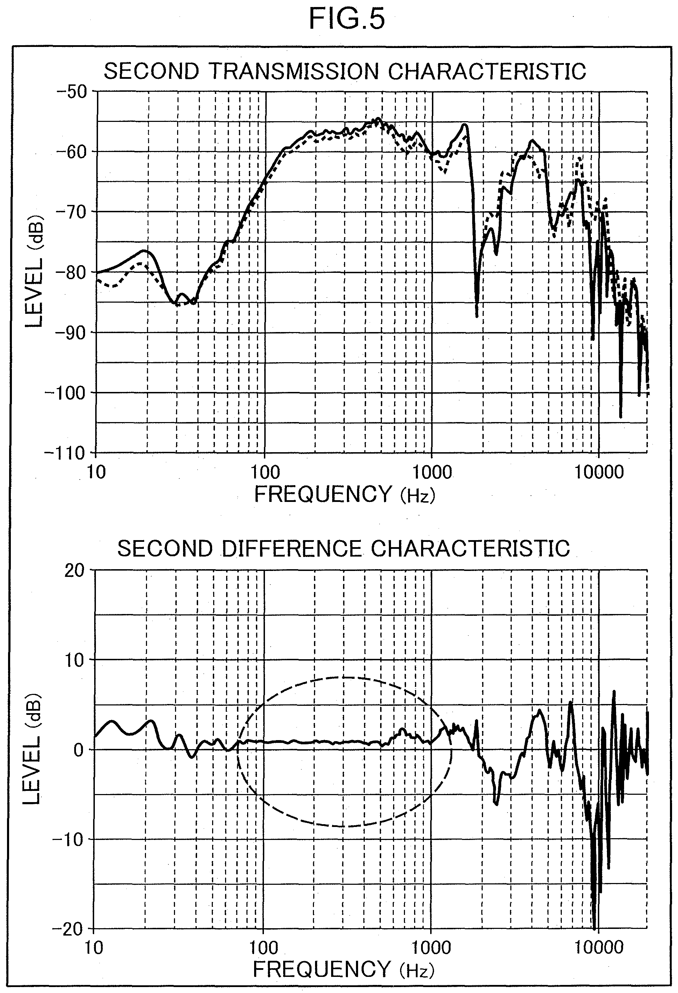

FIG. 4 is graphs showing exemplary first transmission characteristics measured in the first head state and the second head state, respectively, and an exemplary first difference characteristic. FIG. 5 is graphs showing exemplary second transmission characteristics measured in the first head state and the second head state, respectively, and an exemplary second difference characteristic.

The upper graph in FIG. 4 shows the first transmission characteristics from the first loudspeaker 21 to the first microphone 31, where the dashed curve represents the first transmission characteristic in the first head state and the solid curve represents the first transmission characteristic in the second head state. The lower graph in FIG. 4 shows the first difference characteristic obtained by subtracting the first transmission characteristic in the first head state before the shifting from the first transmission characteristic in the second head state after the shifting. For the first difference characteristic, every level in a frequency band (for example, from 100 to 800 Hz) surrounded by a dashed circle is 0 dB or lower (substantially from -4 to -1 dB).

On the other hand, the upper graph in FIG. 5 shows the second transmission characteristics from the second loudspeaker 22 to the second microphone 32, where the dashed curve represents the second transmission characteristic in the first head state and the solid curve represents the second transmission characteristic in the second head state. The lower graph in FIG. 5 shows the second difference characteristic obtained by subtracting the second transmission characteristic in the first head state before the shifting from the second transmission characteristic in the second head state after the shifting. For the second difference characteristic, every level in the frequency band (for example, from 100 to 800 Hz) surrounded by a dashed circle are 0 dB or higher (substantially from +1 to +2 dB).

Accordingly, when the head of the listener 10 has shifted from the first head state to the second head state, levels of a second difference characteristic between second transmission characteristics from the second loudspeaker 22 to the second microphone 32 increase, for example, in the frequency band from 100 to 800 Hz, whereas levels of a first difference characteristic between first transmission characteristics from the first loudspeaker 21 to the first microphone 31 decrease, for example, in the frequency band from 100 to 800 Hz. The first difference characteristic and the second difference characteristic show opposite difference characteristics.

This is for the following reason. In the first head state, the head of the listener 10 is at a certain distance from the second loudspeaker 22, the second microphone 32, the first loudspeaker 21, and the first microphone 31. On the other hand, in the second head state, the head of the listener 10 has moved closer to the second loudspeaker 22 and the second microphone 32, which causes a reproduced sound from the second loudspeaker 22 and a sound reflected from the head of the listener 10 to be louder, and raises the level due to the in-phase in a low frequency having a longer wavelength. Meanwhile, the head of the listener 10 is more distant from the first loudspeaker 21 and the first microphone 31, which causes a reproduced sound from the first loudspeaker 21 and a sound reflected from the head of the listener 10 to be softer, and lowers the level due to fewer in-phase in a low frequency having a longer wavelength.

Therefore, the threshold determination section 3 in FIG. 3 monitors a range where this characteristic change has occurred. Specifically, for example, the threshold determination section 3 determines that the head of the listener 10 has shifted from the first head state to the second head state when the number (X) of frequency points which have a positive level value for the second difference characteristic is equal to or greater than a predetermined first threshold (e.g., N/2) among the number (N) of the whole frequency points in a frequency band of 100 to 800 Hz, for example, and the number (Y) of frequency points which have a negative level value for the first difference characteristic is equal to or greater than a predetermined second threshold (e.g., N/2) among the number (N) of the whole frequency points in the frequency band of 100 to 800 Hz, for example. Then, when it is determined that the change has occurred, the switching part 4 operates the first switch 51 and the second switch 52.

The first threshold and the second threshold are not limited to N/2. For example, the first threshold and the second threshold may be N/3, N, 0.8N, or 0.9N as long as the condition enables an accurate determination of the state change. Besides, the first threshold and the second threshold may be either the same value or different values. For example, it may be appreciated that the first threshold is 0.8N and the second threshold is 0.9N.

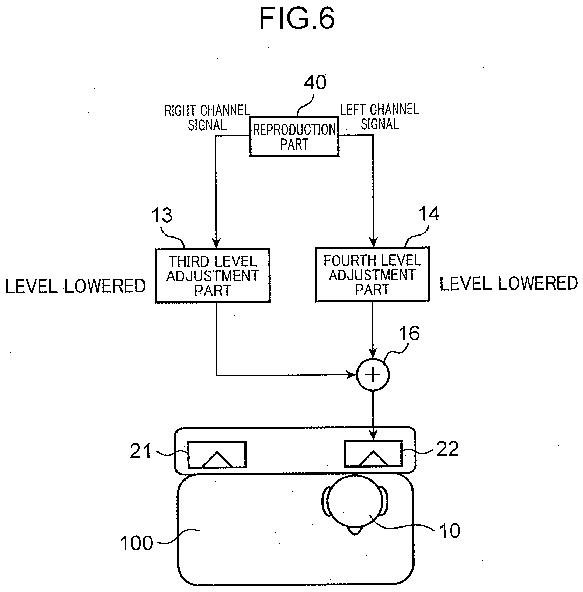

FIG. 6 is a diagram showing a signal reproduction method in the second head state in which the head of the listener 10 is closer to the second loudspeaker 22. FIG. 6 concisely shows a configuration after an operation to the first switch 51 and the second switch 52.

In FIG. 6, a right channel signal from the reproduction part 40 is input to the second addition part 16 after its level is lowered by the third level adjustment part 13. Similarly, a left channel signal from the reproduction part 40 is input to the second addition part 16 after its level is lowered by the fourth level adjustment part 14. The second addition part 16 adds the right channel signal from the third level adjustment part 13 and the left channel signal from the fourth level adjustment part 14, and outputs it to the second loudspeaker 22. The second loudspeaker 22 reproduces the addition signal obtained by adding the right channel signal and the left channel signal, and the first loudspeaker 21 reproduces nothing. At this moment, a level of the addition signal reproduced at the second loudspeaker 22 is adjusted by the third level adjustment part 13 and the fourth level adjustment part 14 in such a manner as to be the same level as the level of the right channel signal and the left channel signal that are respectively reproduced at the first loudspeaker 21 and the second loudspeaker 22 in the first head state in FIG. 1.

Consequently, since the listener 10 can hear in the second head state a sound at the same level as in the first head state in FIG. 1, the listener 10 is kept from feeling a discomfort for a volume change. Additionally, since the listener 10 can hear the right channel signal and the left channel signal at the same level, the listener 10 is kept from perceiving the lack of information. Further, since a level of the addition signal that is reproduced at the second loudspeaker 22 and is obtained by adding the right channel signal and the left channel signal is substantially the same as the level of the right channel signal and the left channel signal that are respectively reproduced at the first loudspeaker 21 and the second loudspeaker 22 in the first head state in FIG. 1, the second loudspeaker 22 is not applied with an excessive load. Thus, the distortion does not occur. Moreover, no sound is reproduced at the first loudspeaker 21, nor is there an increase in the level of the sound reproduced at the second loudspeaker 22. Therefore, the sound leakage to the periphery can be suppressed without use of a specific cover member having a high sound insulation like in Patent Literature 1. People around the seat 100 can be thus kept from being disturbed.

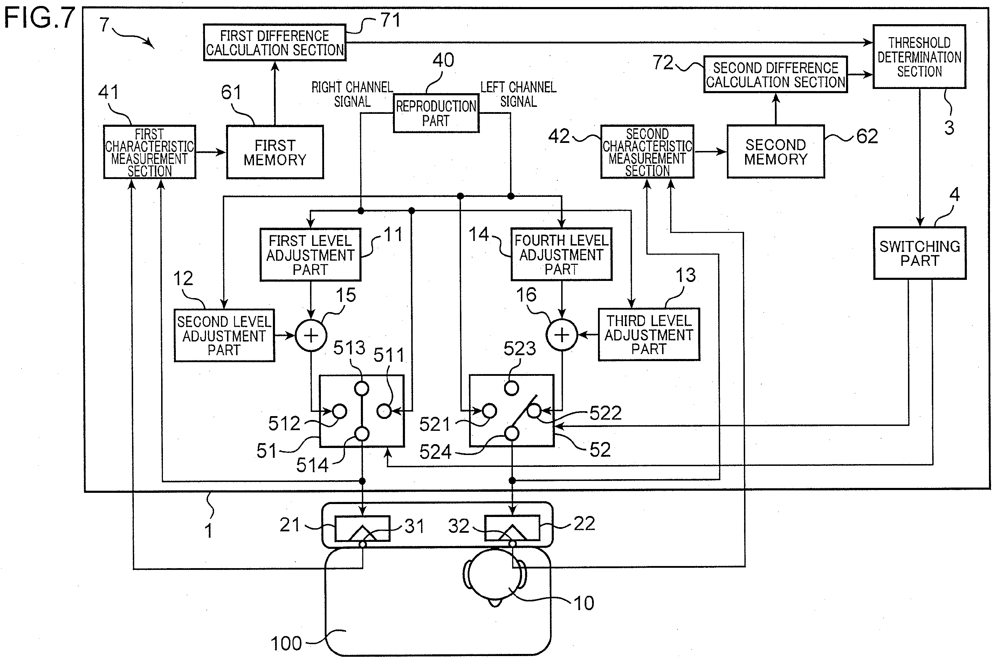

FIG. 7 is a diagram showing an exemplary configuration of a signal reproduction system when the head of the listener 10 is in the second head state in Embodiment 1 of the present disclosure. FIG. 7 shows a more specific configuration of the state shown in FIG. 6. In other words, in the configuration shown in FIG. 2, the first characteristic measurement section 41 measures a first transmission characteristic from the first loudspeaker 21 to the first microphone 31, the second characteristic measurement section 42 measures a second transmission characteristic from the second loudspeaker 22 to the second microphone 32, and the first difference calculation section 71 and the second difference calculation section 72 calculate a first difference characteristic and a second difference characteristic on the basis of the first transmission characteristic and the second transmission characteristic, respectively. Then, the threshold determination section 3 determines that the head of the listener 10 is in the second head state, i.e., has moved closer to the second loudspeaker 22. Accordingly, the switching part 4 electrically connects the third terminal 513 with the fourth terminal 514 of the first switch 51, and electrically connects the second terminal 522 with the fourth terminal 524 of the second switch 52. The signal reproduction system thus has the configuration shown in FIG. 7.

The description of the reproduced sound reproduced at the first loudspeaker 21 and the second loudspeaker 22 according to the state of the first switch 51 and the second switch 52 shown in FIG. 7 is omitted, because the description is made with reference to FIG. 6. The first loudspeaker 21 reproduces nothing, and the second loudspeaker 22 reproduces the addition signal obtained by adding the right channel signal and the left channel signal.

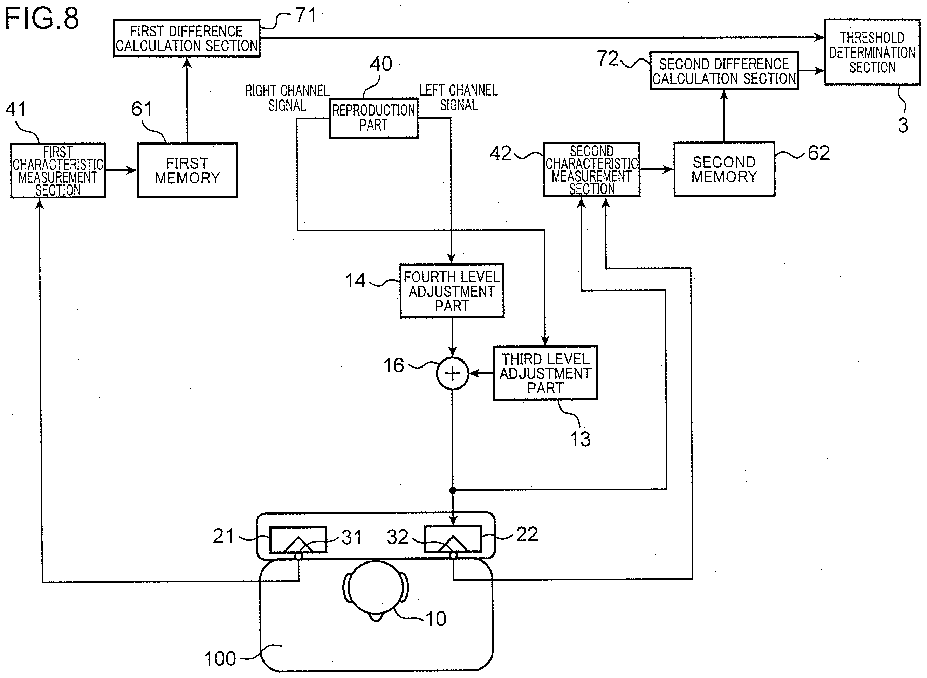

Next, when the state of the head of the listener 10 returns from the second head state shown in FIG. 7 in which the head of the listener 10 is closer to the second loudspeaker 22 to the first head state in which the head of the listener 10 is at the position between the first loudspeaker 21 and the second loudspeaker 22, the configuration shown in FIG. 7 is represented as in FIG. 8.

FIG. 8 is a diagram showing a measurement of a first transmission characteristic and a second transmission characteristic immediately after the head of the listener 10 has shifted from the second head state to the first head state.

In FIG. 8, a right channel signal and a left channel signal from the reproduction part 40 are added together by the second addition part 16 after their respective levels are lowered by the third level adjustment part 13 and the fourth level adjustment part 14. The addition signal from the second addition part 16 is reproduced at the second loudspeaker 22 and is detected by the second microphone 32. Further, the second characteristic measurement section 42 calculates a second transmission characteristic from the second loudspeaker 22 to the second microphone 32 using the addition signal from the second addition part 16 and a reproduced sound signal from the second microphone 32, and stores it in the second memory 62.

On the other hand, since no signal from the first switch 51 is input to the first loudspeaker 21, the first loudspeaker 21 reproduces nothing. Since the first characteristic measurement section 41 is not input with any signal from the first switch 51, the first characteristic measurement section 41 cannot normally measure a first transmission characteristic from the first loudspeaker 21 to the first microphone 31. In this case, the first characteristic measurement section 41 measures a characteristic that is zero as a time characteristic (-∞ as a frequency characteristic) or a characteristic of an error noise at a quite low level. This abnormal characteristic is stored in the first memory 61.

The first difference calculation section 71 compares the first transmission characteristic measured in the first head state in FIG. 8 with the first transmission characteristic measured in the second head state in FIG. 7, and the second difference calculation section 72 compares the second transmission characteristic measured in the first head state in FIG. 8 with the second transmission characteristic measured in the second head state in FIG. 7.

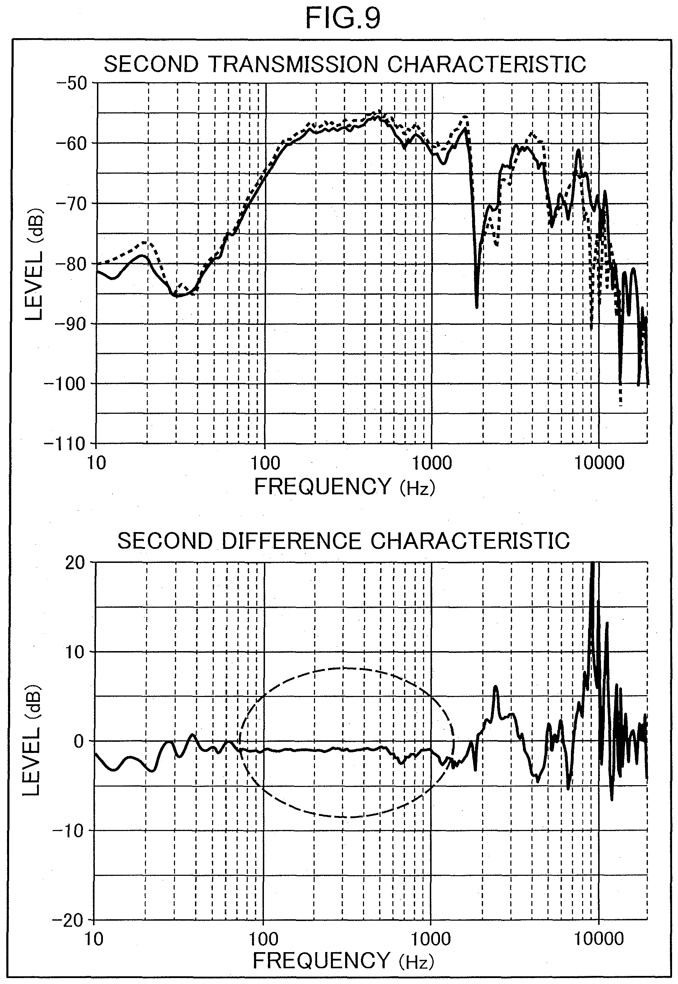

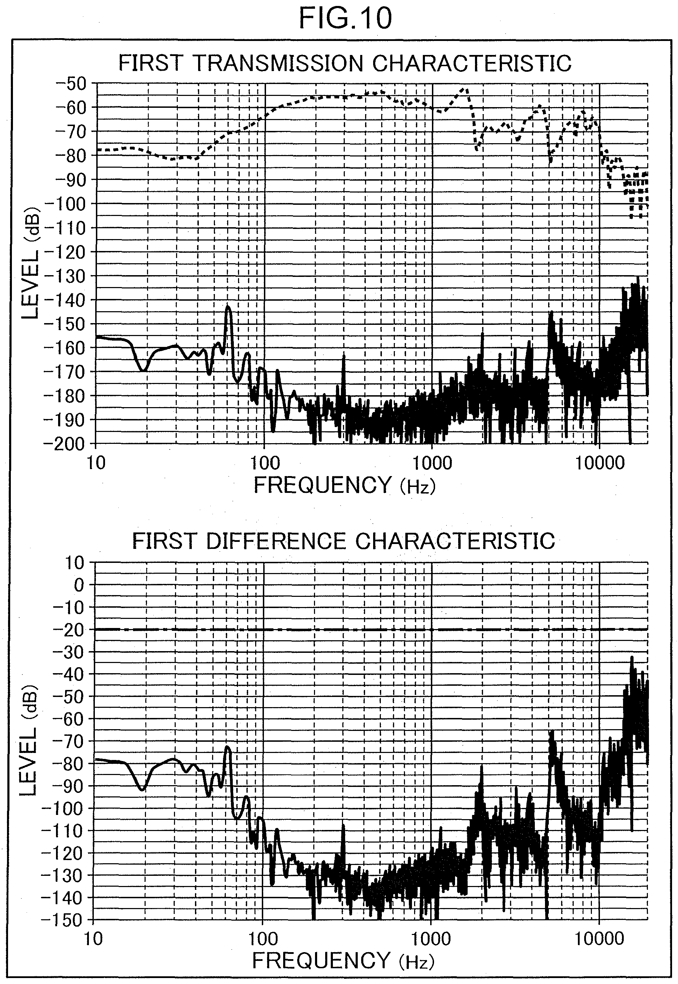

FIG. 9 is graphs showing an exemplary second transmission characteristic measured in the second head state, an exemplary second transmission characteristic measured immediately after the head has shifted from the second head state to the first head state, and an exemplary second difference characteristic. FIG. 10 is graphs showing an exemplary first transmission characteristic measured in the second head state, an exemplary first transmission characteristic measured immediately after the head has shifted from the second head state to the first head state, and an exemplary first difference characteristic.

Specifically, first, the second difference calculation section 72 reads from the second memory 62 the second transmission characteristic from the second loudspeaker 22 to the second microphone 32 in the second head state before the head shifting of the listener 10. This second transmission characteristic is represented by the dashed curve in the upper graph in FIG. 9. Next, the second difference calculation section 72 reads from the second memory 62 the second transmission characteristic from the second loudspeaker 22 to the second microphone 32 in the first head state after the head shifting. This second transmission characteristic is represented by the solid curve in the upper graph in FIG. 9. Then, the second difference calculation section 72 calculates the second difference characteristic represented by the solid curve in the lower graph in FIG. 9 on the basis of these second transmission characteristics. The second difference calculation section 72 calculates the second difference characteristic obtained by subtracting the second transmission characteristic in the second head state before the shifting from the second transmission characteristic in the first head state after the shifting. For the second difference characteristic, every level in the frequency band (for example, from 100 to 800 Hz) indicated by a dashed circle is 0 dB or lower (substantially from -2 to -1 dB). This feature enables the threshold determination section 3 to determine the shifting from the second head state to the first head state.

Specifically, the threshold determination section 3 detects, when the head of the listener 10 is at the position closer to the second loudspeaker 22, a level at each of the frequency points in the predetermined frequency band (for example, from 100 to 800 Hz) for the second difference characteristic. The threshold determination section 3 counts the number Y of frequency points which have a negative level value for the second difference characteristic. The threshold determination section 3 determines that the head of the listener 10 has moved from the position closer to the second loudspeaker 22 to the position between the first loudspeaker 21 and the second loudspeaker 22 when the number Y of frequency points for the second difference characteristic is equal to or greater than the second threshold.

Further, the threshold determination section 3 may determine the shifting from the second head state to the first head state by taking into combinational consideration another determination as to whether a level at every frequency for the first difference characteristic calculated by the first difference calculation section 71 is equal to or lower than the third threshold (for example, -20 dB) represented by the dash-dot line in the lower graph in FIG. 10.

FIG. 10 is described in more detail. First, the first difference calculation section 71 reads from the first memory 61 a first transmission characteristic from the first loudspeaker 21 to the first microphone 31 in the first head state measured when the head of the listener 10 is at the position between the first loudspeaker 21 and the second loudspeaker 22. This first transmission characteristic is represented by the dashed curve in the upper graph in FIG. 10. Next, the first difference calculation section 71 reads from the first memory 61 a first transmission characteristic from the first loudspeaker 21 to the first microphone 31 in the first head state after the head shifting. This first transmission characteristic is represented by the solid curve in the upper graph in FIG. 10. Then, the first difference calculation section 71 calculates the first difference characteristic represented by the solid curve in the lower graph in FIG. 10 from these first transmission characteristics. The first difference calculation section 71 calculates the first difference characteristic obtained by subtracting the first transmission characteristic read from the first memory 61 from the first transmission characteristic in the first head state after the shifting. The lower graph in FIG. 10 shows that the level of the first difference characteristic has significantly a small value at every frequency.

Thus, the threshold determination section 3 can determine that the listener 10 has shifted from the second head state to the first head state on the basis of a combination of a second difference characteristic as exemplified in FIG. 9 and a first difference characteristic as exemplified in FIG. 10.

In other words, the first difference calculation section 71 may further calculate, when the head of the listener 10 is at the position closer to the second loudspeaker 22, as the first difference characteristic a difference between the first transmission characteristic currently measured by the first characteristic measurement section 41 and a first transmission characteristic when the head of the listener 10 is at the position between the first loudspeaker 21 and the second loudspeaker 22. The threshold determination section 3 may further determine, when the head of the listener 10 is at the position closer to the second loudspeaker 22, whether a level at every frequency for the first difference characteristic is lower than the third threshold. The threshold determination section 3 may determine that the head of the listener 10 has moved from the position closer to the second loudspeaker 22 to the position between the first loudspeaker 21 and the second loudspeaker 22 when the number Y of frequency points for the second difference characteristic is equal to or greater than the second threshold and the level at every frequency for the first difference characteristic is lower than the third threshold.

Although the second difference calculation section 72 compares the second transmission characteristic measured in the first head state in FIG. 8 with the second transmission characteristic measured in the second head state in FIG. 7, the present disclosure is not limited thereto. The second difference calculation section 72 may compare the second transmission characteristic measured in the first head state in FIG. 8 with the second transmission characteristic measured in the first head state in FIG. 1 instead of the second transmission characteristic measured in the second head state in FIG. 7. Since, in this case, both of them are the second transmission characteristics in the first head state, the second difference characteristic is substantially zero, and no characteristic change is seen in the frequency band indicated by the dashed circle in the lower graph in FIG. 9. Further, the first difference calculation section 71 may compare the first transmission characteristic measured in the second head state in FIG. 2 with the first transmission characteristic measured in the first head state in FIG. 8. Since, in this case, the first transmission characteristic measured in the second head state in FIG. 2 is the first transmission characteristic in the second head state shown in FIG. 4, the levels of the first difference characteristic are as low as the levels in the lower graph in FIG. 10.

Accordingly, the second difference calculation section 72 may calculate as the second difference characteristic a difference between the second transmission characteristic currently measured by the second characteristic measurement section 42 and a second transmission characteristic when the head of the listener 10 is at the position between the first loudspeaker 21 and the second loudspeaker 22. Further, the first difference calculation section 71 may calculate as the first difference characteristic a difference between the first transmission characteristic currently measured by the first characteristic measurement section 41 and a first transmission characteristic when the head of the listener 10 is at the position closer to the second loudspeaker 22. The threshold determination section 3 may determine that the listener 10 has shifted from the second head state to the first head state when the second difference characteristic resulting from the comparison between the two second transmission characteristics in the first head state is practically zero and the level at every frequency for the first difference characteristic resulting from the comparison between the first transmission characteristic in the second head state and the first transmission characteristic in the first head state is lower than the third threshold.

The case where the head of the listener 10 moves from the position (the first head state) between the first loudspeaker 21 and the second loudspeaker 22 to the position (the second head state) closer to the second loudspeaker and then returns to the position (the first head state) between the first loudspeaker 21 and the second loudspeaker 22 is described above. However, the head of the listener 10 may also move from the position (the first head state) between the first loudspeaker 21 and the second loudspeaker 22 to the position (the third head state) closer to the first loudspeaker 21. Accordingly, the case where the head of the listener 10 has shifted from the first head state to the third head state is described below.

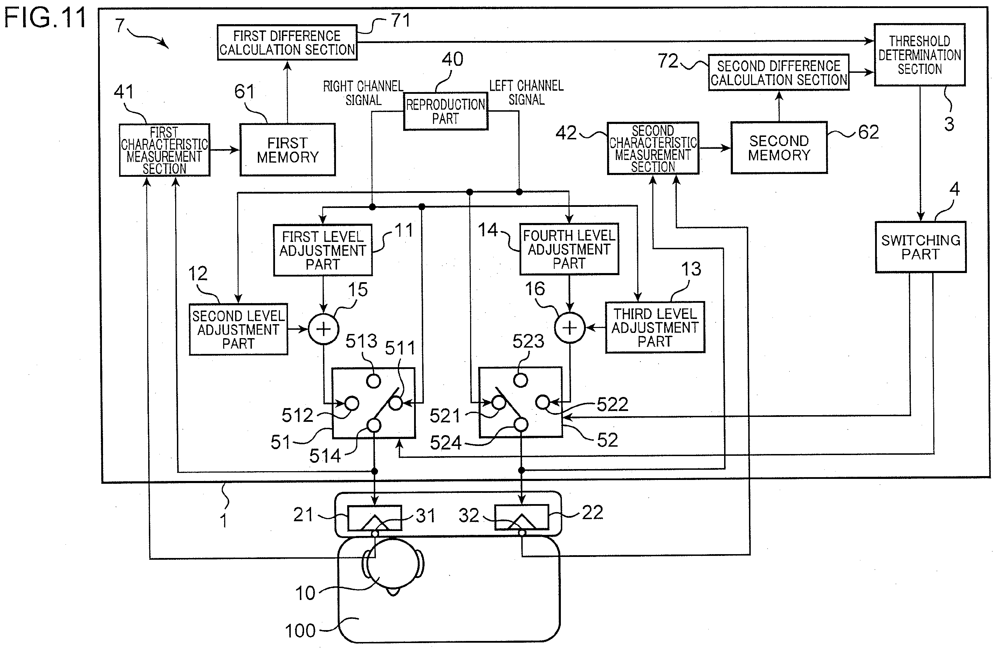

FIG. 11 is a diagram showing the exemplary configuration of the signal reproduction system immediately after the head of the listener 10 has shifted from the first head state to the third head state in Embodiment 1 of the present disclosure. The third head state means a state in which the head of the listener 10 is at the position closer to the first loudspeaker 21.

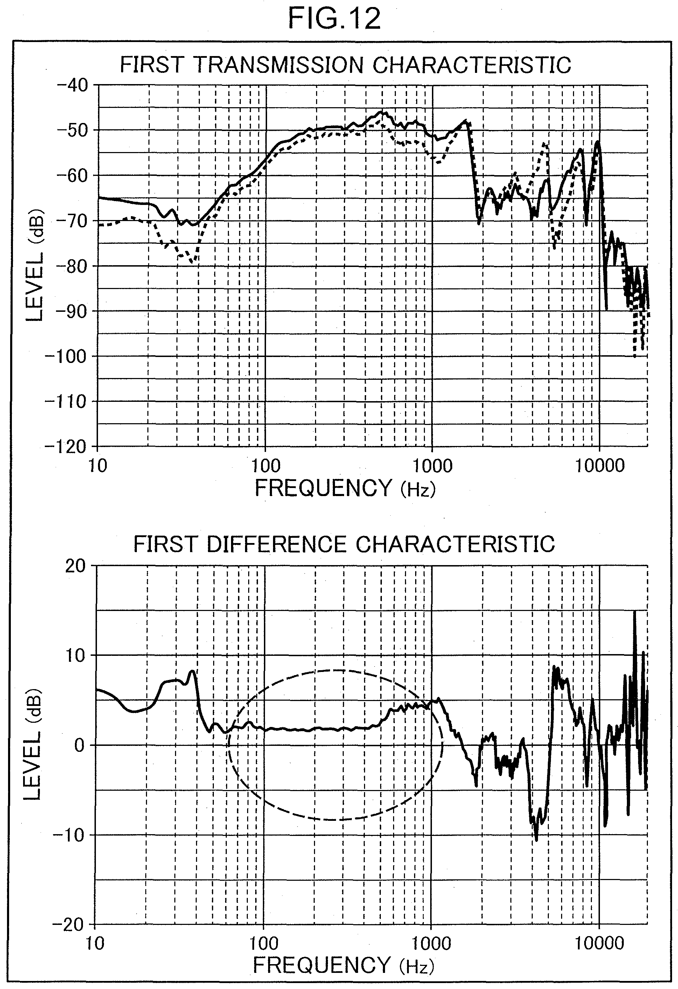

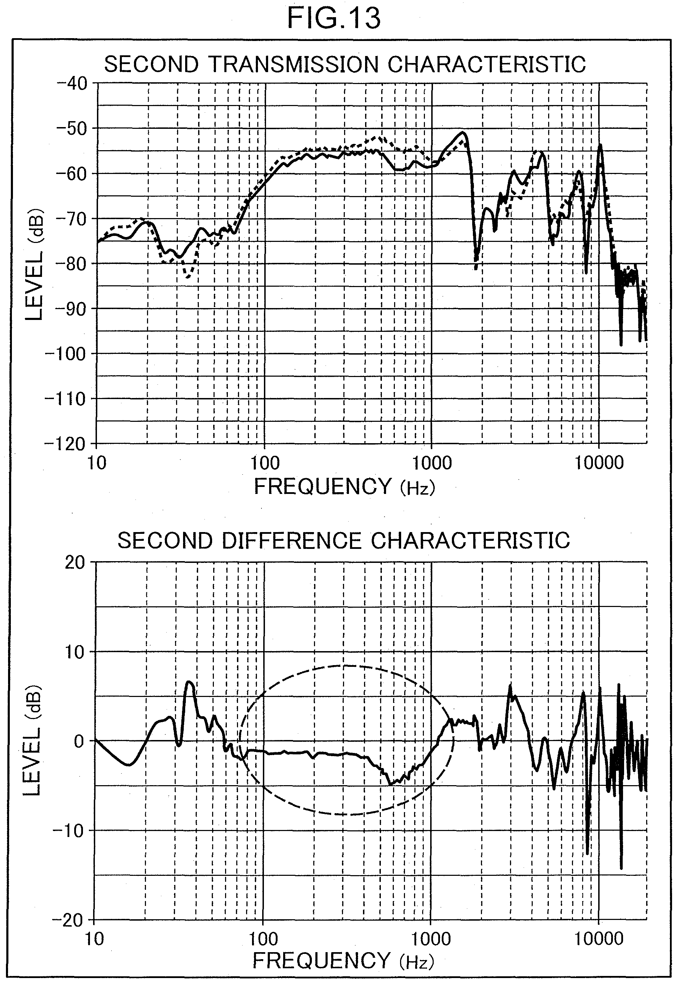

First, the head of the listener 10 is in the first head state shown in FIG. 1, and thereafter, shifts to the third head state shown in FIG. 11. In this case, the first characteristic measurement section 41 measures first transmission characteristics from the first loudspeaker 21 to the first microphone 31 in the first head state and in the third head state, and the second characteristic measurement section 42 measures second transmission characteristics from the second loudspeaker 22 to the second microphone 32 in the first head state and in the third head state. The first transmission characteristics measured in the first head state and in the third head state are, for example, shown in FIG. 12, and the second transmission characteristics measured in the first head state and in the third head state are, for example, shown in FIG. 13.

FIG. 12 is graphs showing the exemplary first transmission characteristics measured in the first head state and the third head state, respectively, and an exemplary first difference characteristic. FIG. 13 is graphs showing the exemplary second transmission characteristics measured in the first head state and the third head state, respectively, and an exemplary second difference characteristic.

The upper graph in FIG. 13 shows the second transmission characteristics from the second loudspeaker 22 to the second microphone 32, where the dashed curve represents the second transmission characteristic in the first head state before the head shifting of the listener 10 and the solid curve represents the second transmission characteristic in the third head state after the head shifting of the listener 10. The lower graph in FIG. 13 shows the second difference characteristic obtained by subtracting the second transmission characteristic in the first head state before the shifting from the second transmission characteristic in the third head state after the shifting. For the second difference characteristic, every level in the frequency band (for example, from 100 to 800 Hz) surrounded by the dashed circle is 0 dB or lower (substantially from -4 to -1 dB).

On the other hand, the upper graph in FIG. 12 shows the first transmission characteristics from the first loudspeaker 21 to the first microphone 31, where the dashed curve represents the first transmission characteristic in the first head state before the head shifting of the listener 10 and the solid curve represents the first transmission characteristic in the third head state after the head shifting of the listener 10. The lower graph in FIG. 12 shows the first difference characteristic obtained by subtracting the first transmission characteristic in the first head state before the shifting from the first transmission characteristic in the third head state after the shifting. For the first difference characteristic, every level in the frequency band (for example, from 100 to 800 Hz) surrounded by a dashed circle is 0 dB or higher (substantially from +1 to +4 dB).

Accordingly, when the head of the listener 10 has shifted from the first head state to the third head state, levels of a second difference characteristic between second transmission characteristics from the second loudspeaker 22 to the second microphone 32 decrease, for example, in the frequency band from 100 to 800 Hz, whereas levels of a first difference characteristic between first transmission characteristics from the first loudspeaker 21 to the first microphone 31 increase, for example, in the frequency band from 100 to 800 Hz. The first difference characteristic and the second difference characteristic show opposite difference characteristics. Accordingly, for the same reasoning as that used with reference to FIG. 4 and FIG. 5, the threshold determination section 3 can determine that the head of the listener 10 has shifted from the first head state to the third head state by determining whether levels in the predetermined frequency band for the first difference characteristic and the second difference characteristic have a positive value or a negative value.

Specifically, the threshold determination section 3 detects, when the head of the listener 10 is at the position between the first loudspeaker 21 and the second loudspeaker 22, a level at each of a plurality of frequency points in the predetermined frequency band for each of the first difference characteristic and the second difference characteristic. The threshold determination section 3 counts the number X of frequency points which have a positive level value and the number Y of frequency points which have a negative level value for each of the first difference characteristic and the second difference characteristic. The threshold determination section 3 determines that the head of the listener 10 has moved from the position between the first loudspeaker 21 and the second loudspeaker 22 to the position closer to the first loudspeaker 21 when the number X of frequency points for the first difference characteristic is equal to or greater than the first threshold and the number Y of frequency points for the second difference characteristic is equal to or greater than the second threshold.

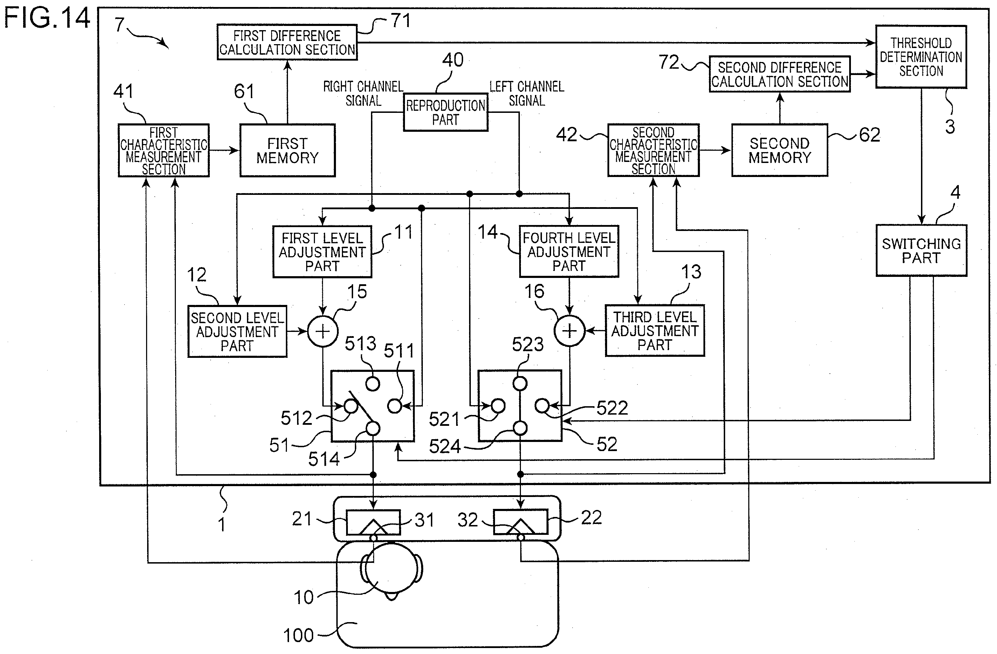

FIG. 14 is a diagram showing an exemplary configuration of the signal reproduction system when the head of the listener 10 is in the third head state in Embodiment 1 of the present disclosure.

When the threshold determination section 3 determines that the head of the listener 10 has shifted from the first head state to the third head state, the switching part 4 operates the first switch 51 and the second switch 52 as shown in FIG. 14. The switching part 4 electrically connects the second terminal 512 with the fourth terminal 514 of the first switch 51, and electrically connects the third terminal 523 with the fourth terminal 524 of the second switch 52. The first level adjustment part 11 lowers the level of the right channel signal from the reproduction part 40, and the second level adjustment part 12 lowers the level of the left channel signal from the reproduction part 40. The first addition part 15 adds the right channel signal having the lowered level and the left channel signal having the lowered level, and outputs the addition signal to the second terminal 512 of the first switch 51. The addition signal is reproduced at the first loudspeaker 21 passing through the second terminal 512 and the fourth terminal 514 of the first switch 51. On the other hand, since the fourth terminal 524 of the second switch 52 is electrically connected to the third terminal 523 that is connected to nowhere, the second loudspeaker 22 reproduces nothing.

A level of the addition signal obtained by adding the right channel signal and the left channel signal reproduced at the first loudspeaker 21 is adjusted by the first level adjustment part 11 and the second level adjustment part 12 in such a manner as to be the same level as the level of the right channel signal and the left channel signal that are respectively reproduced at the first loudspeaker 21 and the second loudspeaker 22 in the first head state in FIG. 1.

Consequently, since the listener 10 can hear in the third head state a sound at the same level as in the first head state in FIG. 1, the listener 10 is kept from feeling a discomfort for a volume change. Additionally, since the listener 10 can hear the right channel signal and the left channel signal at the same level, the listener 10 is kept from perceiving the lack of information. Further, since a level of the addition signal that is reproduced at the first loudspeaker 21 and is obtained by adding the right channel signal and the left channel signal is substantially the same as the level of the right channel signal and the left channel signal that are respectively reproduced at the first loudspeaker 21 and the second loudspeaker 22 in the first head state in FIG. 1, the first loudspeaker 21 is not applied with an excessive load. Thus, the distortion does not occur. Moreover, no sound is reproduced at the second loudspeaker 22, nor is there an increase in the level of the sound reproduced at the first loudspeaker 21. Therefore, the sound leakage to the periphery can be suppressed without use of a specific cover member having a high sound insulation like in Patent Literature 1. People around the seat 100 can be thus kept from being disturbed.

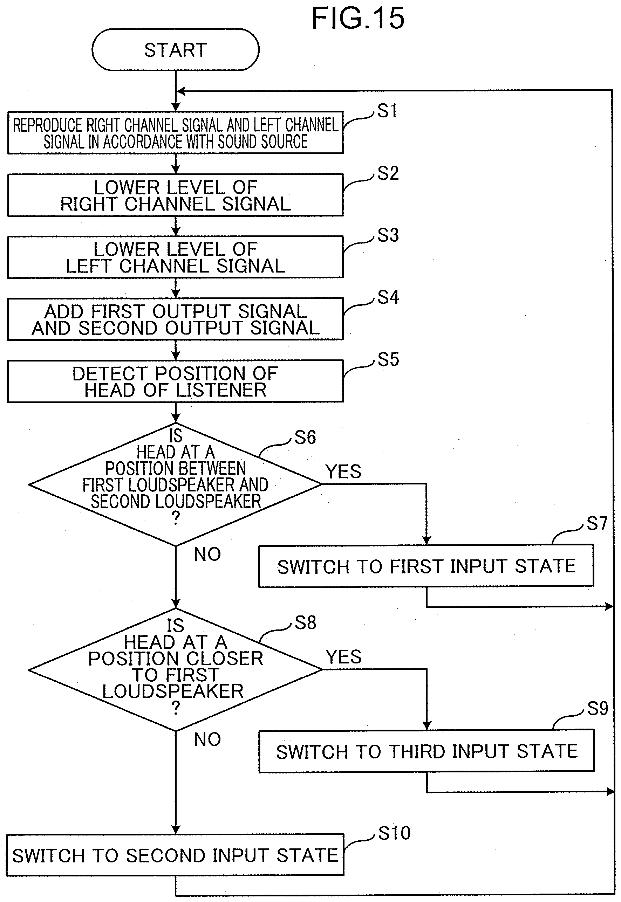

FIG. 15 is a flowchart showing operations of the signal reproduction apparatus 1 in Embodiment 1 of the present disclosure.

First, in Step S1, the reproduction part 40 reproduces a right channel signal and a left channel signal in accordance with a sound source.

Next, in Step S2, the first level adjustment part 11 and the third level adjustment part 13 lower a level of the right channel signal reproduced by the reproduction part 40.

Next, in Step S3, the second level adjustment part 12 and the fourth level adjustment part 14 lower a level of the left channel signal reproduced by the reproduction part 40.

Next, in Step S4, the first addition part 15 and the second addition part 16 add the right channel signal having the level lowered by the first level adjustment part 11 and the left channel signal having the level lowered by the second level adjustment part 12.

Next, in Step S5, the head detection part 7 detects a position of the head of the listener 10. The head detection part 7 detects which position among the position between the first loudspeaker 21 and the second loudspeaker 22, the position closer to the first loudspeaker 21, and the position closer to the second loudspeaker 22 the head of the listener 10 is at.

Next, in Step S6, the switching part 4 determines whether the head of the listener 10 is at the position between the first loudspeaker 21 and the second loudspeaker 22.

When it is determined that the head of the listener 10 is at the position between the first loudspeaker 21 and the second loudspeaker 22 (YES in Step S6), in Step S7, the switching part 4 switches the input states to the first loudspeaker 21 and the second loudspeaker 22 to the first input state in which the right channel signal is input to the first loudspeaker 21 and the left channel signal is input to the second loudspeaker 22. In other words, the switching part 4 controls the first switch 51 to connect the first terminal 511 to the fourth terminal 514 and controls the second switch 52 to connect the first terminal 521 to the fourth terminal 524. Thus, the first loudspeaker 21 outputs the right channel signal, and the second loudspeaker 22 outputs the left channel signal.

On the other hand, when it is determined that the head of the listener 10 is not at the position between the first loudspeaker 21 and the second loudspeaker 22 (NO in Step S6), in Step S8, the switching part 4 determines whether the head of the listener 10 is at the position closer to the first loudspeaker 21.

When it is determined that the head of the listener 10 is at the position closer to the first loudspeaker 21 (YES in Step S8), in Step S9, the switching part 4 switches input states to the first loudspeaker 21 and the second loudspeaker 22 to the third input state in which the output signal from the first addition part 15 is input to the first loudspeaker 21 and both the left channel signal and the output signal from the second addition part 16 are kept from being input to the second loudspeaker 22. In other words, the switching part 4 controls the first switch 51 to connect the second terminal 512 to the fourth terminal 514 and controls the second switch 52 to connect the third terminal 523 to the fourth terminal 524. Thus, the first loudspeaker 21 outputs the addition signal obtained by adding the right channel signal having the lowered level and the left channel signal having the lowered level, and the second loudspeaker 22 outputs nothing.

On the other hand, when it is determined that the head of the listener 10 is not at the position closer to the first loudspeaker 21, namely, when it is determined that the head of the listener 10 is at the position closer to the second loudspeaker 22 (NO in Step S8), in Step S10, the switching part 4 switches the input states to the first loudspeaker 21 and the second loudspeaker 22 to the second input state in which the output signal from the second addition part 16 is input to the second loudspeaker 22, and both the right channel signal and the output signal are kept from being input to the first loudspeaker 21. In other words, the switching part 4 controls the first switch 51 to connect the third terminal 513 to the fourth terminal 514 and controls the second switch 52 to connect the second terminal 522 to the fourth terminal 524. Thus, the first loudspeaker 21 outputs nothing, and the second loudspeaker 22 outputs the addition signal obtained by adding the right channel signal having the lowered level and the left channel signal having the lowered level.

In this manner, the input states to the first loudspeaker 21 arranged near the right ear of the listener 10 and the second loudspeaker 22 arranged near the left ear of the listener 10 can be switched according to the position of the head of the listener 10 between: the first input state in which the right channel signal is input to the first loudspeaker 21 and the left channel signal is input to the second loudspeaker 22; the second input state in which the output signal obtained by adding the right channel signal having the lowered level and the left channel signal having the lowered level is input to the second loudspeaker 22 and both the right channel signal and the output signal are kept from being input to the first loudspeaker 21; and the third input state in which the output signal is input to the first loudspeaker 21 and both the left channel signal and the output signal are kept from being input to the second loudspeaker 22.

For example, when the head of the listener 10 is closer to the first loudspeaker 21, the output signal obtained by adding the right channel signal having the adjusted level and the left channel signal having the adjusted level is input to the first loudspeaker 21, and both the left channel signal and the output signal are kept from being input to the second loudspeaker 22. Further, for example, when the head of the listener 10 is closer to the second loudspeaker 22, the output signal is input to the second loudspeaker 22, and both the right channel signal and the output signal are kept from being input to the first loudspeaker 21.

Therefore, even when the head of the listener 10 is closer to one of the right loudspeaker and the left loudspeaker, the listener 10 can hear all the information of the right channel signal and the left channel signal that are reproduced in accordance with the sound source without the lack of the information from the other of the loudspeakers.

Next, operations of the head detection part 7 that detects a position of the head of the listener 10 is described.

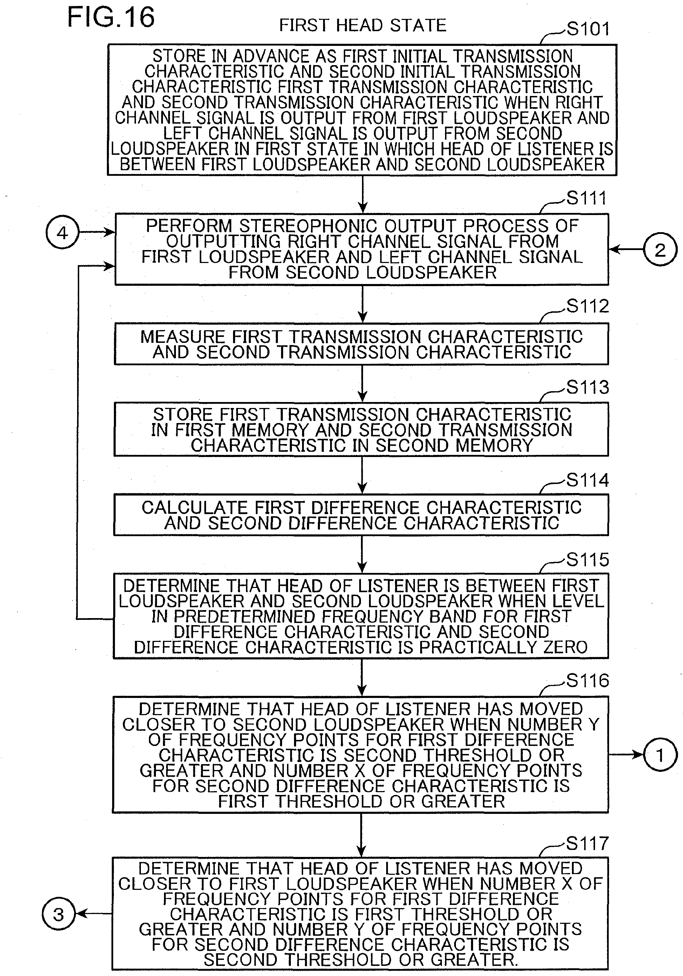

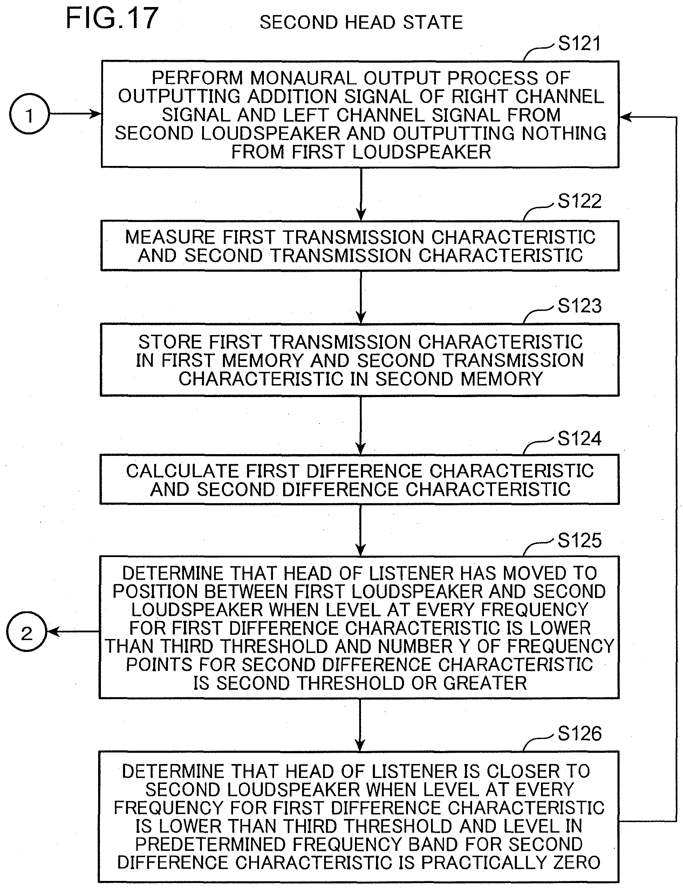

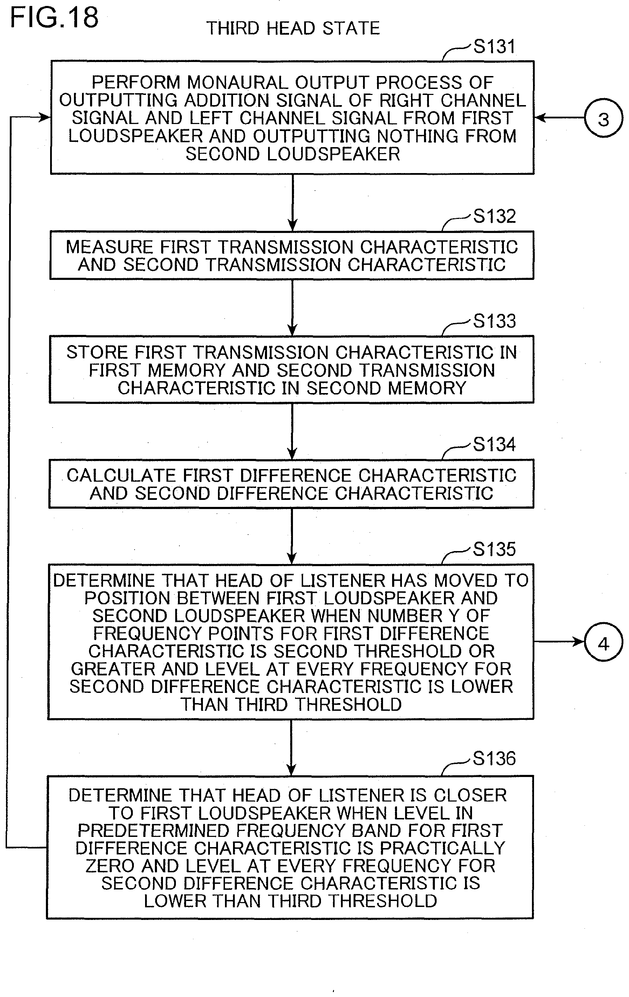

FIG. 16 is a first flowchart showing operations of a head detection part 7 in Embodiment 1 of the present disclosure. FIG. 17 is a second flowchart showing operations of the head detection part 7 in Embodiment 1 of the present disclosure. FIG. 18 is a third flowchart showing operations of the head detection part 7 in Embodiment 1 of the present disclosure.

In the operations shown in FIG. 16, in advance, in the first head state in which the head of the listener 10 is at the position between the first loudspeaker 21 and the second loudspeaker 22, a right channel signal output from the first loudspeaker 21 is detected by the first microphone 31, a measured first transmission characteristic is stored in the first memory 61 as the first initial transmission characteristic, and a left channel signal output from the second loudspeaker 22 is detected by the second microphone 32, and a measured second transmission characteristic is stored in the second memory 62 as the second initial transmission characteristic. Then, a difference between the first initial transmission characteristic and first transmission characteristics or a difference between the second initial transmission characteristic and second transmission characteristics that are measured in each of the first head state, the second head state, and the third head state are calculated, but the present disclosure is not limited thereto. For example, a difference between a first transmission characteristic or a second transmission characteristic that is previously measured in the first head state and a first transmission characteristic or a second transmission characteristic that is currently measured in the second head state may be calculated. In other words, the threshold determination section 3 may more accurately determine a head position by suitably combining each time a first initial transmission characteristic, a second initial transmission characteristic, a first transmission characteristic in the first head state, a second transmission characteristic in the second head state, and a third transmission characteristic in the third head state according to the state of the head shifting of the listener 10.

First, in Step S101, a first transmission characteristic and a second transmission characteristic when a right channel signal is output from the first loudspeaker 21 and a left channel signal is output from the second loudspeaker 22 in the first head state in which the head of the listener 10 is at the position between the first loudspeaker 21 and the second loudspeaker 22 are stored in advance in the first memory 61 and the second memory 62 as the first initial transmission characteristic and the second initial transmission characteristic, i.e., as initial conditions.

The first initial transmission characteristic and the second initial transmission characteristic may be stored when the signal reproduction apparatus 1 is shipped from a factory. Alternatively, a first transmission characteristic and a second transmission characteristic may be measured when the listener 10 first sits on the seat 100 in the first head state, and the first transmission characteristic and the second transmission characteristic that are measured may be stored as the first initial transmission characteristic and the second initial transmission characteristic.

Next, in Step S111, the switching part 4 controls the first switch 51 and the second switch 52, and performs a stereophonic output process of outputting the right channel signal from the first loudspeaker 21 and the left channel signal from the second loudspeaker 22 on the assumption that the head of the listener 10 is between the first loudspeaker 21 and the second loudspeaker 22.

Next, in Step S112, the first characteristic measurement section 41 measures a first transmission characteristic from the first loudspeaker 21 to the first microphone 31, and the second characteristic measurement section 42 measures a second transmission characteristic from the second loudspeaker 22 to the second microphone 32.

Next, in Step S113, the first characteristic measurement section 41 stores the measured first transmission characteristic in the first memory 61, and the second characteristic measurement section 42 stores the measured second transmission characteristic in the second memory 62.

Next, in Step S114, the first difference calculation section 71 calculates a first difference characteristic between the first transmission characteristic stored in the first memory 61 in Step S113 and the first initial transmission characteristic stored in advance in the first memory 61, and the second difference calculation section 72 calculates a second difference characteristic between the second transmission characteristic stored in the second memory 62 in Step S113 and the second initial transmission characteristic stored in advance in the second memory 62.

Next, in Step S115 to Step S117, the threshold determination section 3 determines a position of the head of the listener 10 on the basis of the first difference characteristic and the second difference characteristic, and shifts to a proper state according to a result of the determination.

Specifically, in Step S115, the threshold determination section 3 determines whether a level in the predetermined frequency band for the first difference characteristic and the second difference characteristic is practically zero. When the level in the predetermined frequency band for the first difference characteristic and the second difference characteristic is practically zero, the threshold determination section 3 determines that the head of the listener 10 is between the first loudspeaker 21 and the second loudspeaker 22. When it is determined that the head of the listener 10 is between the first loudspeaker 21 and the second loudspeaker 22, the process returns to Step S111. On the other hand, when the level in the predetermined frequency band for the first difference characteristic and the second difference characteristic is practically not zero, the process proceeds to Step S116.

Next, in Step S116, the threshold determination section 3 determines whether the number Y of frequency points for the first difference characteristic is equal to or greater than the second threshold and the number X of frequency points for the second difference characteristic is equal to or greater than the first threshold. The number Y of frequency points for the first difference characteristic indicates at how many frequency points in the predetermined frequency band the first difference characteristic has a negative level value. The number X of frequency points for the second difference characteristic indicates at how many frequency points in the predetermined frequency band the second difference characteristic has a positive level value.

The threshold determination section 3 determines that the head of the listener 10 has moved closer to the second loudspeaker 22 when the number Y of frequency points for the first difference characteristic is equal to or greater than the second threshold and the number X of frequency points for the second difference characteristic is equal to or greater than the first threshold. When it is determined that the head of the listener 10 has moved closer to the second loudspeaker 22, the process shifts to Step S121 in FIG. 17. On the other hand, when the number Y of frequency points for the first difference characteristic is not equal to or greater than the second threshold, or the number X of frequency points for the second difference characteristic is not equal to or greater than the first threshold, the process proceeds to Step S117.

Next, in Step S117, the threshold determination section 3 determines whether the number X of frequency points for the first difference characteristic is equal to or greater than the first threshold and the number Y of frequency points for the second difference characteristic is equal to or greater than the second threshold. The number X of frequency points for the first difference characteristic indicates at how many frequency points in the predetermined frequency band the first difference characteristic has a positive level value. The number Y of frequency points for the second difference characteristic indicates at how many frequency points in the predetermined frequency band the second difference characteristic has a negative level value.

The threshold determination section 3 determines that the head of the listener 10 has moved closer to the first loudspeaker 21 when the number X of frequency points for the first difference characteristic is equal to or greater than the first threshold and the number Y of frequency points for the second difference characteristic is equal to or greater than the second threshold. When it is determined that the head of the listener 10 has moved closer to the first loudspeaker 21, the process shifts to Step S131 in FIG. 18. On the other hand, when the number X of frequency points for the first difference characteristic is not equal to or greater than the first threshold, or when the number Y of frequency points for the second difference characteristic is not equal to or greater than the second threshold, the process returns to Step S111.

In Step S115, when the number X of frequency points for neither the first difference characteristic nor the second difference characteristic is equal to or greater than the first threshold, and the number Y of frequency points for neither the first difference characteristic nor the second difference characteristic is equal to or greater than the second threshold, the threshold determination section 3 may determine that the level in the predetermined frequency band for the first difference characteristic and the second difference characteristic is practically zero, and may determine that the head of the listener 10 is between the first loudspeaker 21 and the second loudspeaker 22.

Next, the case where the operation shifts to Step S121 in the second head state shown in FIG. 17 is described.

In Step S121, the switching part 4 controls the first switch 51 and the second switch 52, and performs a monaural output process of outputting an addition signal of the right channel signal and the left channel signal from the second loudspeaker 22 and outputting nothing from the first loudspeaker 21.

Next, in Step S122, the first characteristic measurement section 41 measures a first transmission characteristic from the first loudspeaker 21 to the first microphone 31 and the second characteristic measurement section 42 measures a second transmission characteristic from the second loudspeaker 22 to the second microphone 32.

Next, in Step S123, the first characteristic measurement section 41 stores the measured first transmission characteristic in the first memory 61, and the second characteristic measurement section 42 stores the measured second transmission characteristic in the second memory 62.

Next, in Step S124, the first difference calculation section 71 calculates a first difference characteristic between the first transmission characteristic stored in the first memory 61 in Step S123 and the first initial transmission characteristic stored in advance in the first memory 61, and the second difference calculation section 72 calculates a second difference characteristic between the second transmission characteristic stored in the second memory 62 in Step S123 and the second initial transmission characteristic stored in advance in the second memory 62.

Next, in Step S125 and Step S126, the threshold determination section 3 determines a position of the head of the listener 10 on the basis of the first difference characteristic and the second difference characteristic, and shifts to a proper state according to a result of the determination.

Specifically, in Step S125, the threshold determination section 3 determines whether a level at every frequency for the first difference characteristic is lower than the third threshold and the number Y of frequency points for the second difference characteristic is equal to or greater than the second threshold. The number Y of frequency points for the second difference characteristic indicates at how many frequency points in the predetermined frequency band the second difference characteristic has a negative level value.

The threshold determination section 3 determines that the head of the listener 10 has moved to the position between the first loudspeaker 21 and the second loudspeaker 22 when the level at every frequency for the first difference characteristic is lower than the third threshold and the number Y of frequency points for the second difference characteristic is equal to or greater than the second threshold. When it is determined that the head of the listener 10 has moved to the position between the first loudspeaker 21 and the second loudspeaker 22, the process shifts to Step S111 in FIG. 16. On the other hand, when the level for the first difference characteristic is not lower than the third threshold at every frequency, or the number Y of the frequency points for the second difference characteristic is not equal to or greater than the second threshold, the process proceeds to Step S126.

Next, in Step S126, the threshold determination section 3 determines whether a level at every frequency for the first difference characteristic is lower than the third threshold and a level in the predetermined frequency band for the second difference characteristic is practically zero.

When the level at every frequency for the first difference characteristic is lower than the third threshold and the level in the predetermined frequency band for the second difference characteristic is practically zero, the threshold determination section 3 determines that the head of the listener 10 is closer to the second loudspeaker 22. When it is determined that the head of the listener 10 is closer to the second loudspeaker 22, the process returns to Step S121.

In Step S126, when the number X of frequency points for the second difference characteristic is not equal to or greater than the first threshold, the number Y of frequency points for the second difference characteristic is not equal to or greater than the second threshold, the threshold determination section 3 may determine that the level in the predetermined frequency band for the second difference characteristic is practically zero.

At this point, even though the head of the listener 10 has moved closer to the first loudspeaker 21 from the proximity of the second loudspeaker 22, the threshold determination section 3 might fail to clearly determine whether the head is in the first head state, i.e., at the center, or the head is in the third head state, i.e., closer to the first loudspeaker 21. In this case, the threshold determination section 3 may once shift to the first head state and then make another determination, and determine whether the head is at the position between the first loudspeaker 21 and the second loudspeaker 22 or at the position closer to the first loudspeaker 21.

Hereinafter, the case where the operation shifts to Step S131 in the third head state shown in FIG. 18 is described.

In Step S131, the switching part 4 controls the first switch 51 and the second switch 52, and performs a monaural output process of outputting an addition signal of the right channel signal and the left channel signal from the first loudspeaker 21 and outputting nothing from the second loudspeaker 22.

Next, in Step S132, the first characteristic measurement section 41 measures a first transmission characteristic from the first loudspeaker 21 to the first microphone 31 and the second characteristic measurement section 42 measures a second transmission characteristic from the second loudspeaker 22 to the second microphone 32.

Next, in Step S133, the first characteristic measurement section 41 stores the measured first transmission characteristic in the first memory 61, and the second characteristic measurement section 42 stores the measured second transmission characteristic in the second memory 62.

Next, in Step S134, the first difference calculation section 71 calculates a first difference characteristic between the first transmission characteristic stored in the first memory 61 in Step S133 and the first initial transmission characteristic stored in advance in the first memory 61, and the second difference calculation section 72 calculates a second difference characteristic between the second transmission characteristic stored in the second memory 62 in Step S133 and the second initial transmission characteristic stored in advance in the second memory 62.

Next, in Step S135 and Step S136, the threshold determination section 3 determines a position of the head of the listener 10 on the basis of the first difference characteristic and the second difference characteristic, and shifts to a proper state according to a result of the determination.

Specifically, in Step S135, the threshold determination section 3 determines whether the number Y of frequency points for the first difference characteristic is equal to or greater than the second threshold, and a level at every frequency for the second difference characteristic is lower than the third threshold. The number Y of frequency points for the first difference characteristic indicates at how many frequency points in the predetermined frequency band the first difference characteristic has a negative level value.

The threshold determination section 3 determines that the head of the listener 10 has moved to the position between the first loudspeaker 21 and the second loudspeaker 22 when the number Y of frequency points for the first difference characteristic is equal to or greater than the second threshold and the level at every frequency for the second difference characteristic is lower than the third threshold. When it is determined that the head of the listener 10 has moved to the position between the first loudspeaker 21 and the second loudspeaker 22, the process shifts to Step S111 in FIG. 16. On the other hand, when the number Y of frequency points for the first difference characteristic is not equal to or greater than the second threshold, or the level for the second difference characteristic is not lower than the third threshold at every frequency, the process proceeds to Step S136.

Next, in Step S136, the threshold determination section 3 determines whether a level in the predetermined frequency band for the first difference characteristic is practically zero and a level at every frequency for the second difference characteristic is lower than the third threshold.

When the level in the predetermined frequency band for the first difference characteristic is practically zero and the level at every frequency for the second difference characteristic is lower than the third threshold, the threshold determination section 3 determines that the head of the listener 10 is closer to the first loudspeaker 21. When it is determined that the head of the listener 10 is closer to the first loudspeaker 21, the process returns to Step S131.

In Step S136, when the number X of frequency points for the first difference characteristic is not equal to or greater than the first threshold, the number Y of frequency points for the first difference characteristic is not equal to or greater than the second threshold, the threshold determination section 3 may determine that the level in the predetermined frequency band for the first difference characteristic is practically zero.

In this manner, a position of the head can be stably determined by having the first head state as the initial state and shifting to the second head state or the third head state via the first head state.

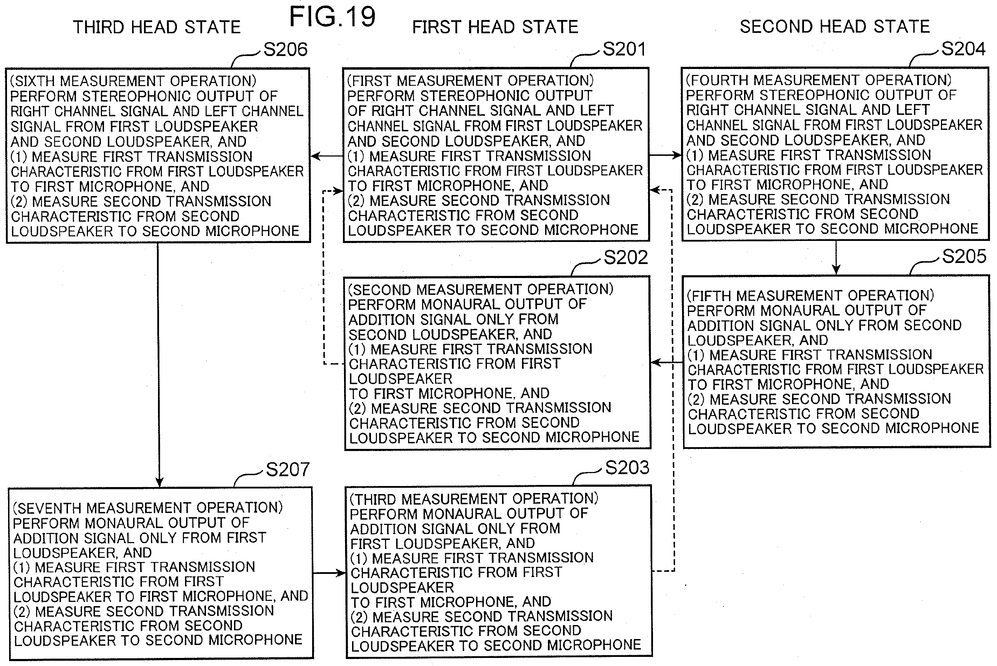

Further, a relationship between the first head state, the second head state, and the third head state is additionally described with reference to FIG. 19.

FIG. 19 is a chart showing the relationship between the first head state, the second head state, and the third head state in Embodiment 1.

FIG. 19 shows, as operations of measuring a first transmission characteristic and a second transmission characteristic when the head of the listener 10 is in the first head state, a first measurement operation (Step S201) in a case of performing a stereophonic output of the right channel signal and the left channel signal from the first loudspeaker 21 and the second loudspeaker 22, a second measurement operation (Step S202) in a case of performing a monaural output of an addition signal only from the second loudspeaker 22, and a third measurement operation (Step S203) in a case of performing a monaural output of the addition signal only from the first loudspeaker 21.

Further, FIG. 19 shows, as operations of measuring a first transmission characteristic and a second transmission characteristic when the head of the listener 10 is in the second head state, a fourth measurement operation (Step S204) in the case of performing the stereophonic output of the right channel signal and the left channel signal from the first loudspeaker 21 and the second loudspeaker 22, and a fifth measurement operation (Step S205) in the case of performing the monaural output of the addition signal only from the second loudspeaker 22.

Further, FIG. 19 shows, as operations of measuring a first transmission characteristic and a second transmission characteristic when the head of the listener 10 is in the third head state, a sixth measurement operation (Step S206) in the case of performing the stereophonic output of the right channel signal and the left channel signal from the first loudspeaker 21 and the second loudspeaker 22, and a seventh measurement operation (Step S207) in the case of performing the monaural output of the addition signal only from the first loudspeaker 21.

In FIG. 19, when the head of the listener 10 is continuously in the first head state, the first measurement operation in Step S201 is repeated. For example, when the head of the listener 10 has shifted from the first head state to the third head state, the sixth measurement operation in Step S206 is performed. As a result, it is determined that the head of the listener 10 has shifted from the first head state to the third head state, and the seventh measurement operation in Step S207 is performed. When the head of the listener 10 is continuously in the third head state, the seventh measurement operation in Step S207 is repeated. For example, when the head of the listener 10 has shifted from the third head state to the first head state, the third measurement operation in Step S203 is performed. As a result, it is determined that the head of the listener 10 has shifted from the third head state to the first head state, and the first measurement operation in Step S201 is performed.

Similarly, for example, when the head of the listener 10 has shifted from the first head state to the second head state, the fourth measurement operation in Step S204 is performed. As a result, it is determined that the head of the listener 10 has shifted from the first head state to the second head state, and the fifth measurement operation in Step S205 is performed. When the head of the listener 10 is continuously in the second head state, the fifth measurement operation in Step S205 is repeated. For example, when the head of the listener 10 has shifted from the second head state to the first head state, the second measurement operation in Step S202 is performed. As a result, it is determined that the head of the listener 10 has shifted from the second head state to the first head state, and the first measurement operation in Step S201 is performed.

In this manner, the first measurement operation to the seventh measurement operation shown in FIG. 19 are repeated according to the state of the head of the listener 10. Each time in each of the first measurement operation to the seventh measurement operation a first transmission characteristic and a second transmission characteristic are newly measured to be additionally stored in the first memory 61 and the second memory 62, respectively.

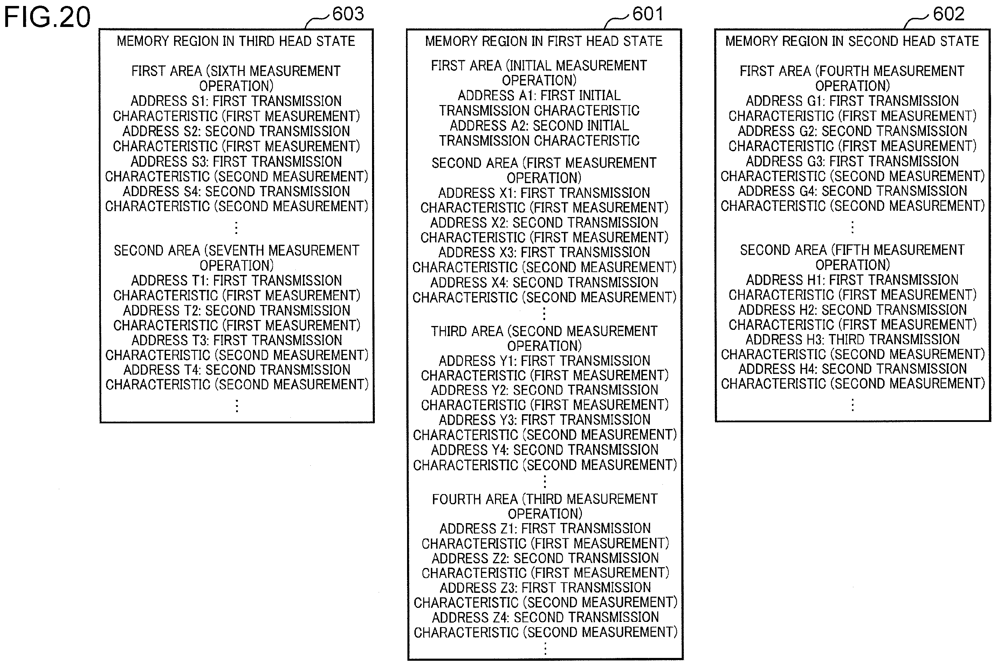

FIG. 20 is a diagram showing exemplary memory regions of the first memory 61 and the second memory 62 in Embodiment 1.

As shown in FIG. 20, each of the first memory 61 and the second memory 62 secures a memory region 601 for the first head state, a memory region 602 for the second head state, and a memory region 603 for the third head state.

The memory region 601 for the first head state stores in advance a first initial transmission characteristic and a second initial transmission characteristic that are measured in an initial measurement operation. The first initial transmission characteristic and the second initial transmission characteristic are stored in a first area of the memory region 601.

Further, the memory region 601 for the first head state, the memory region 602 for the second head state, the memory region 603 for the third head state store first transmission characteristics and second transmission characteristics in respective measurement operations in areas different from each other. For example, a first transmission characteristic and a second transmission characteristic that are measured in a first measurement operation are stored in a second area of the memory region 601, a first transmission characteristic and a second transmission characteristic that are measured in a second measurement operation are stored in a third area of the memory region 601, a first transmission characteristic and a second transmission characteristic that are measured in a third measurement operation are stored in a fourth area of the memory region 601.

Further, for example, a first transmission characteristic and a second transmission characteristic that are measured in a fourth measurement operation are stored in a first area of the memory region 602, a first transmission characteristic and a second transmission characteristic that are measured in a fifth measurement operation are stored in a second area of the memory region 602. Additionally, for example, a first transmission characteristic and a second transmission characteristic that are measured in a sixth measurement operation are stored in a first area of the memory region 603, a first transmission characteristic and a second transmission characteristic that are measured in a seventh measurement operation are stored in a second area of the memory region 603.

For example, when the head of the listener 10 is continuously in the first head state, meanwhile, the first measurement operation in Step S201 in FIG. 19 is repeated. In this case, the first transmission characteristics and the second transmission characteristics corresponding to the number of times the first measurement operation is performed are stored in the memory region 601 for the first head state in FIG. 20. Further, even in a case of a temporal shifting to the second head state and a subsequent return to the first head state, the shifting and the return are additionally stored in the memory region 601, thus previous data is not overwritten.

The memory region 602 for the second head state and the memory region 603 for the third head state store a first transmission characteristic and a second transmission characteristic in the same manner as the memory region 601.

Accordingly, since a large amount of data is stored in the first memory 61 and the second memory 62, the first difference calculation section 71, the second difference calculation section 72, and the threshold determination section 3 may select the most suitable data and combination thereof among the stored data.

### Embodiment 2

In Embodiment 1, a position of a head of a listener 10 is detected using a first transmission characteristic from the first loudspeaker 21 to the first microphone 31 and a second transmission characteristic from the second loudspeaker 22 to the second microphone 32. On the other hand, in Embodiment 2, a position of the head of the listener 10 is detected on the basis of an image of the head of the listener 10 that is photographed by a camera.

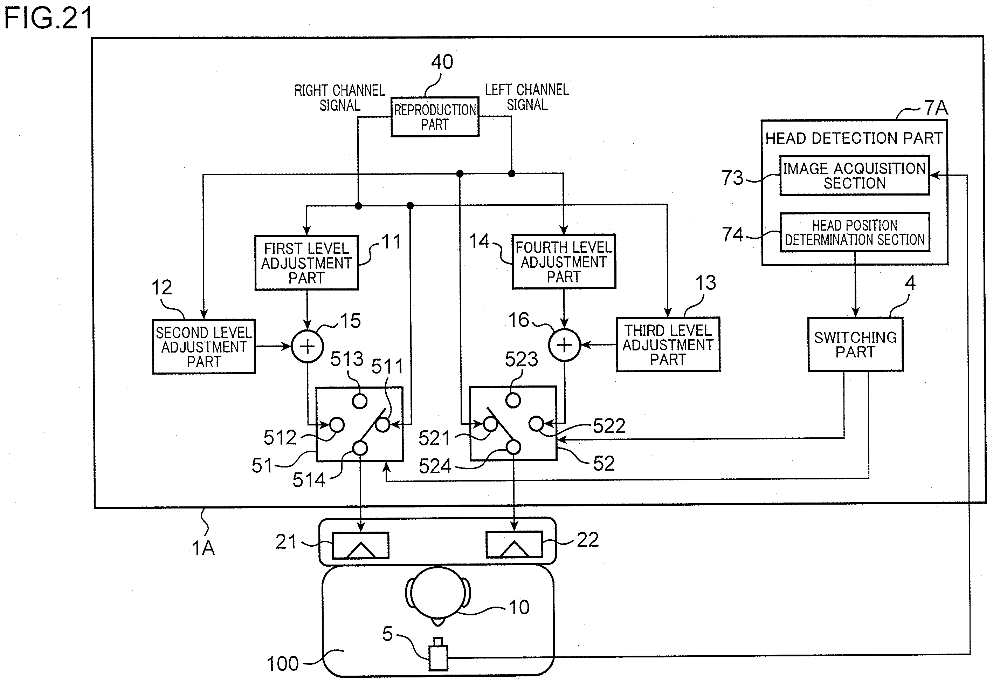

FIG. 21 is a diagram showing an exemplary configuration of a signal reproduction system when the head of the listener 10 is in the first head state in Embodiment 2 of the present disclosure.

The signal reproduction system shown in FIG. 21 includes a signal reproduction apparatus 1A, a first loudspeaker 21, a second loudspeaker 22, and a camera 5. In Embodiment 2, the same elements as those of Embodiment 1 are allotted with the same reference numerals, and the description thereof is omitted.

The signal reproduction apparatus 1A includes a first level adjustment part 11, a second level adjustment part 12, a third level adjustment part 13, a fourth level adjustment part 14, a first addition part 15, a second addition part 16, a reproduction part 40, a first switch 51, a second switch 52, a head detection part 7A, and a switching part 4.

The camera 5 which is placed in front of the listener 10 photographs the head of the listener 10. The camera 5 outputs the photographed image to the head detection part 7A of the signal reproduction apparatus 1A.

The head detection part 7A detects a position of the head of the listener 10. The head detection part 7A includes an image acquisition section 73 and a head position determination section 74.

The image acquisition section 73 acquires a photographed image of the head of the listener 10. The image acquisition section 73 acquires the image photographed by the camera 5.

The head position determination section 74 analyzes the image acquired by the image acquisition section 73 to thereby determine a position of the head of the listener 10. The head position determination section 74 recognizes the head of the listener 10, the first loudspeaker 21, and the second loudspeaker 22 in the image, and determines which position among a position between the first loudspeaker 21 and the second loudspeaker 22, a position closer to the first loudspeaker 21, and a position closer to the second loudspeaker 22 the head of the listener 10 is at.

The switching part 4 makes switching of input states to the first loudspeaker 21 and the second loudspeaker 22 according to the position of the head of the listener 10 detected by the head detection part 7A between: the first input state in which a right channel signal is input to the first loudspeaker 21 and a left channel signal is input to the second loudspeaker 22; the second input state in which an output signal from the second addition part 16 is input to the second loudspeaker 22 and both the right channel signal and an output signal from the first addition part 15 are kept from being input to the first loudspeaker 21; and the third input state in which the output signal from the first addition part 15 is input to the first loudspeaker 21 and both the left channel signal and the output signal are kept from being input to the second loudspeaker 22. The switching part 4 controls the first switch 51 and the second switch 52 according to the position of the head of the listener 10 detected by the head detection part 7A.

Since the operations of the signal reproduction apparatus 1A except the head detection part 7A in Embodiment 2 are the same as the operations of the signal reproduction apparatus 1 except the head detection part 7 in Embodiment 1, the description thereof is omitted.

A position of the head of a listener 10 can be thus detected from a photographed image of the head of the listener 10.

### Embodiment 3

In Embodiment 1, a position of a head of a listener 10 is detected using two microphones, i.e., the first microphone 31 and the second microphone 32. On the other hand, in Embodiment 3, a position of the head of the listener 10 is detected using a single microphone.

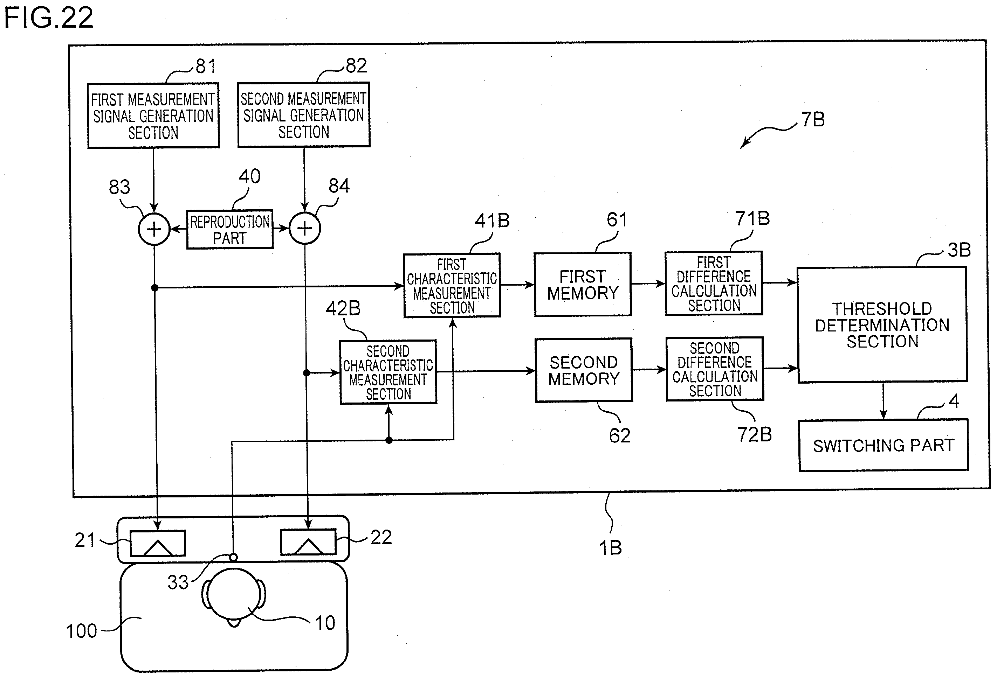

FIG. 22 is a diagram showing an exemplary configuration of a signal reproduction system when the head of the listener 10 is in the first head state in Embodiment 3 of the present disclosure.

The signal reproduction system shown in FIG. 22 includes a signal reproduction apparatus 1B, a first loudspeaker 21, a second loudspeaker 22, and a microphone 33. In Embodiment 2, the same elements as those of Embodiment 1 are allotted with the same reference numerals, and the description thereof is omitted.

The microphone 33 is arranged between the first loudspeaker 21 and the second loudspeaker 22, and in particular, is arranged at a midpoint between the first loudspeaker 21 and the second loudspeaker 22.

The signal reproduction apparatus 1B includes a first level adjustment part 11, a second level adjustment part 12, a third level adjustment part 13, a fourth level adjustment part 14, a first addition part 15, a second addition part 16, a reproduction part 40, a first switch 51, a second switch 52, a head detection part 7B, and a switching part 4. In FIG. 22, the first level adjustment part 11, the second level adjustment part 12, the third level adjustment part 13, the fourth level adjustment part 14, the first addition part 15, the second addition part 16, the first switch 51, and the second switch 52 are omitted.

The head detection part 7B includes a first characteristic measurement section 41B, a second characteristic measurement section 42B, a first memory 61, a second memory 62, a first difference calculation section 71B, a second difference calculation section 72B, a threshold determination section 3B, a first measurement signal generation section 81, a second measurement signal generation section 82, a third addition part 83, and a fourth addition part 84.

The first measurement signal generation section 81 generates a first measurement signal that does not overlap with a right channel signal. The first measurement signal includes, for example, an ultrasonic signal of 20 kHz or higher or a signal in an audible frequency range of 10 kHz to 20 kHz, which has a level lower than that of the right channel signal.

The second measurement signal generation section 82 generates a second measurement signal that does not overlap with a left channel signal and is different from the first measurement signal. The second measurement signal includes, for example, an ultrasonic signal of 20 kHz or higher or a signal in an audible frequency range of 10 kHz to 20 kHz, which has a level lower than that of the right channel signal.

The third addition part 83 adds the right channel signal reproduced by the reproduction part 40 and the first measurement signal generated by the first measurement signal generation section 81. The third addition part 83 outputs an addition signal obtained by adding the right channel signal and the first measurement signal to the first level adjustment part 11, the third level adjustment part 13, and a first terminal 511 of the first switch 51.

A fourth terminal 514 of the first switch 51 is connected to the first loudspeaker 21 and the first characteristic measurement section 41B. When the fourth terminal 514 is connected to the first terminal 511, the output signal from the third addition part 83 is output to both the first loudspeaker 21 and the first characteristic measurement section 41B. When the fourth terminal 514 is connected to a second terminal 512, an output signal that is output from the first addition part 15 is output to both the first loudspeaker 21 and the first characteristic measurement section 41B. When the fourth terminal 514 is connected to a third terminal 513, the output signal from the third addition part 83 and the output signal from the first addition part 15 are kept from being output to the first loudspeaker 21 and the first characteristic measurement section 41B.

The fourth addition part 84 adds the left channel signal reproduced by the reproduction part 40 and the second measurement signal generated by the second measurement signal generation section 82. The fourth addition part 84 outputs an addition signal obtained by adding the left channel signal and the second measurement signal to the second level adjustment part 12, the fourth level adjustment part 14, and a first terminal 521 of the second switch 52.

A fourth terminal 524 of the second switch 52 is connected to both the second loudspeaker 22 and the second characteristic measurement section 42B. When the fourth terminal 524 is connected to the first terminal 521, the output signal from the fourth addition part 84 is output to both the second loudspeaker 22 and the second characteristic measurement section 42B. When the fourth terminal 524 is connected to a second terminal 522, an output signal that is output from the second addition part 16 is output to both the second loudspeaker 22 and the second characteristic measurement section 42B. When the fourth terminal 524 is connected to a third terminal 523, the output signal from the fourth addition part 84 and the output signal from the second addition part 16 are kept from being output to the second loudspeaker 22 and the second characteristic measurement section 42B.

The first characteristic measurement section 41B measures a first transmission characteristic from the first loudspeaker 21 to the microphone 33 arranged between the first loudspeaker 21 and the second loudspeaker 22 using a reproduced sound signal detected by the microphone 33 and an addition signal obtained by adding the first measurement signal generated by the first measurement signal generation section 81 to the right channel signal reproduced by the reproduction part 40.

The second characteristic measurement section 42B measures a second transmission characteristic from the second loudspeaker 22 to the microphone 33 arranged between the first loudspeaker 21 and the second loudspeaker 22 using the reproduced sound signal detected by the microphone 33 and an addition signal obtained by adding the second measurement signal generated by the second measurement signal generation section 82 to the left channel signal reproduced by the reproduction part 40.

The first difference calculation section 71B calculates as a first difference characteristic a difference between a first transmission characteristic currently measured by the first characteristic measurement section 41B and a first transmission characteristic previously measured and stored in the first memory 61.

The second difference calculation section 72B calculates as a second difference characteristic a difference between a second transmission characteristic currently measured by the second characteristic measurement section 42B and a second transmission characteristic previously measured and stored in the second memory 62.

The first difference calculation section 71B may calculate as the first difference characteristic a difference between a first transmission characteristic currently measured by the first characteristic measurement section 41B and a first initial transmission characteristic stored in the first memory 61. The second difference calculation section 72B may calculate as the second difference characteristic a difference between a second transmission characteristic currently measured by the second characteristic measurement section 42B and a second initial transmission characteristic stored in the second memory 62.

The threshold determination section 3B determines a position of the head of the listener 10 on the basis of the first difference characteristic calculated by the first difference calculation section 71B and the second difference characteristic calculated by the second difference calculation section 72B.

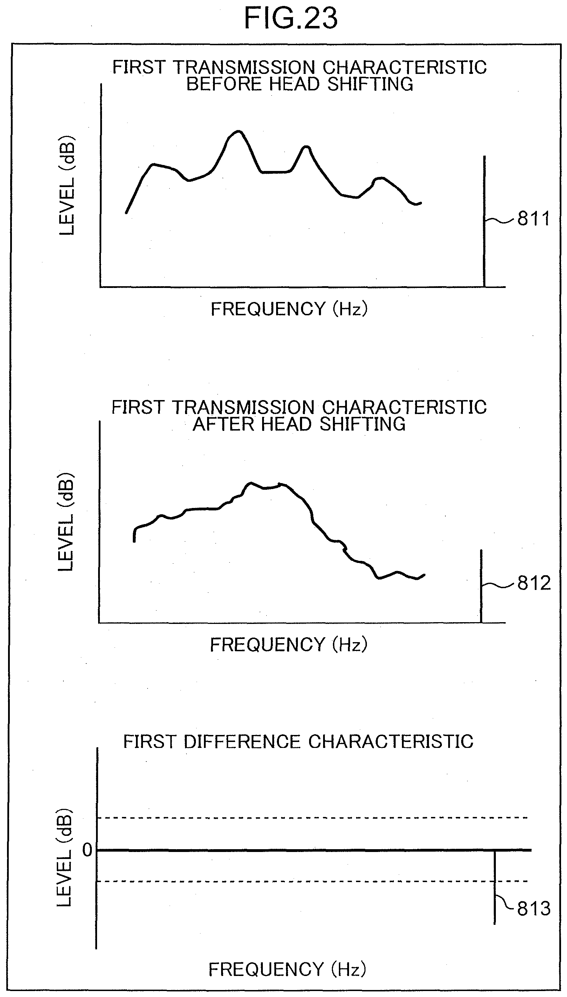

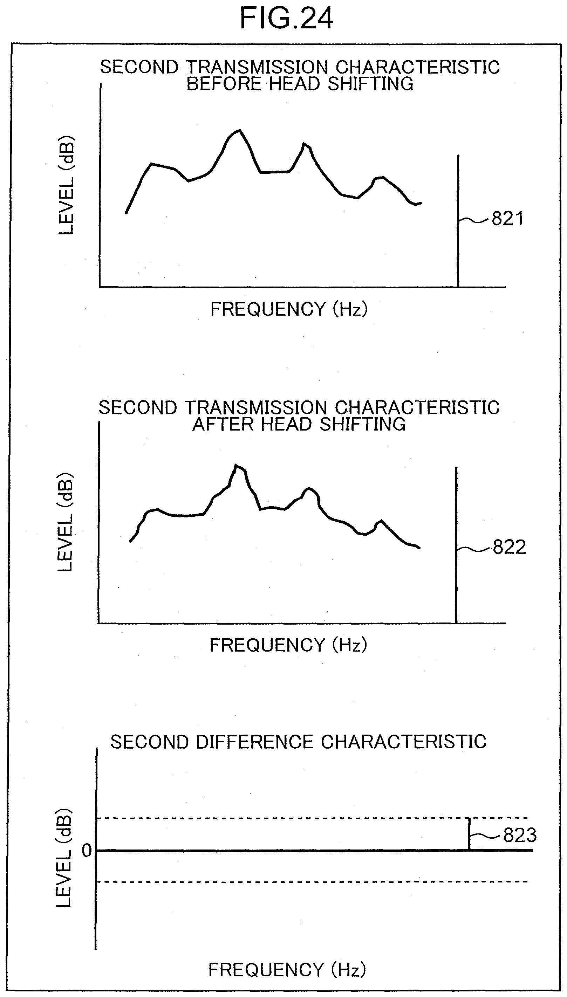

FIG. 23 is graphs showing exemplary first transmission characteristics measured in the first head state before a head shifting and the second head state after the head shifting, respectively, and an exemplary first difference characteristic in Embodiment 3. FIG. 24 is graphs showing exemplary second transmission characteristics measured in the first head state before the head shifting and the second head state after the head shifting, respectively, and an exemplary second difference characteristic in Embodiment 3.

The upper graph in FIG. 23 shows the first transmission characteristic from the first loudspeaker 21 to the microphone 33 when the head of the listener 10 is between the first loudspeaker 21 and the second loudspeaker 22 (in the first head state) before the head shifting. The first transmission characteristic before the head shifting includes a first measurement signal 811 that is added to the right channel signal. The middle graph in FIG. 23 shows the first transmission characteristic from the first loudspeaker 21 to the microphone 33 when the head of the listener 10 is at the position closer to the second loudspeaker 22 (in the second head state) after the head shifting. The first transmission characteristic after the head shifting includes a first measurement signal 812 that is added to the right channel signal. The first measurement signal 812 has a level lower than a level of the first measurement signal 811. The lower graph in FIG. 23 shows the first difference characteristic obtained by subtracting the first transmission characteristic in the first head state before the head shifting from the first transmission characteristic in the second head state after the head shifting. In the first difference characteristic, a first measurement signal 813 has a negative level value.

The upper graph in FIG. 24 shows the second transmission characteristic from the second loudspeaker 22 to the microphone 33 when the head of the listener 10 is between the first loudspeaker 21 and the second loudspeaker 22 (in the first head state) before the head shifting. The second transmission characteristic before the head shifting includes a second measurement signal 821 that is added to the left channel signal. The middle graph in FIG. 24 shows the second transmission characteristic from the second loudspeaker 22 to the microphone 33 when the head of the listener 10 is at the position closer to the second loudspeaker 22 (in the second head state) after the head shifting. The second transmission characteristic after the head shifting includes a second measurement signal 822 that is added to the left channel signal. The second measurement signal 822 has a level lower than a level of the second measurement signal 821. The lower graph in FIG. 24 shows the second difference characteristic obtained by subtracting the second transmission characteristic in the first head state before the head shifting from the second transmission characteristic in the second head state after the head shifting. In the second difference characteristic, a second measurement signal 823 has a positive level value.

Accordingly, when the head of a listener 10 has shifted from the first head state to the second head state, a level of a second measurement signal 823 included in a second difference characteristic between second transmission characteristics from the second loudspeaker 22 to the microphone 33 is greater than zero, whereas a level of a first measurement signal 813 included in a first difference characteristic between first transmission characteristics from the first loudspeaker 21 to the microphone 33 is smaller than zero.

Thus, the threshold determination section 3B detects, when the head of the listener 10 is at the position between the first loudspeaker 21 and the second loudspeaker 22, a level of the first measurement signal included in the first difference characteristic and a level of the second measurement signal included in the second difference characteristic. The threshold determination section 3B determines that the head of the listener 10 has moved from the position between the first loudspeaker 21 and the second loudspeaker 22 to the position closer to the second loudspeaker 22 when the level of the first measurement signal included in the first difference characteristic is smaller than zero and the level of the second measurement signal included in the second difference characteristic is greater than zero.

Further, the threshold determination section 3B determines that the head of the listener 10 has moved from the position between the first loudspeaker 21 and the second loudspeaker 22 to the position closer to the first loudspeaker 21 when the level of the first measurement signal included in the first difference characteristic is greater than zero and the level of the second measurement signal included in the second difference characteristic is smaller than zero.

The threshold determination section 3B detects, when the head of the listener 10 is at the position closer to the second loudspeaker 22, a level of the second measurement signal included in the second difference characteristic. The threshold determination section 3B determines that the head of the listener 10 has moved from the position closer to the second loudspeaker 22 to the position between the first loudspeaker 21 and the second loudspeaker 22 when the level of the second measurement signal included in the second difference characteristic is smaller than zero.

The threshold determination section 3B detects, when the head of the listener 10 is at the position closer to the first loudspeaker 21, a level of the first measurement signal included in the first difference characteristic. The threshold determination section 3B determines that the head of the listener 10 has moved from the position closer to the first loudspeaker 21 to the position between the first loudspeaker 21 and the second loudspeaker 22 when the level of the first measurement signal included in the first difference characteristic is smaller than zero.

Accordingly, in Embodiment 3, a position of the head of a listener 10 can be detected using a single microphone. The configuration of the signal reproduction system is thus further simplified, consequently reducing the manufacturing cost of the signal reproduction system.

Note that, in the above embodiments, each element may be configured with a dedicated hardware or may be implemented by executing a software program suitable for each element. Each element may be established by a program execution part, such as a CPU or a processor, reading and executing a software program recorded in recording medium, such as a hard disk or a semiconductor memory. Further, a program may be executed by another independent computer system by recording the program on storage medium and transferring the program, or by transferring the program via a network.

Part or all of functions of apparatuses in embodiments of the present disclosure are established by a large scale integration (LSI), which is typically an integrated circuit. These may be formed into chips individually, or may be formed into a single chip including a part or the whole. Further, the circuit integration is not limited to LSI, and may be achieved by a dedicated circuit or a general-purpose processor. A field programmable gate array (FPGA) that can be programmed after LSI fabrication, or a reconfigurable processor that can reconfigure connection and setting of circuit cells inside LSI may be used.

Further, part or all of the functions of apparatuses in embodiments of the present disclosure may be established by a processor, such as a CPU, executing the program.

Further, all the numbers used above are illustrated to specifically describe the present disclosure, and the present disclosure is not limited to the illustrated numbers.

Further, the order in which the steps shown in the flowcharts are performed is illustrated to specifically describe the present disclosure, and may be an order other than the above as long as similar effects can be obtained. Further, part of the above steps may be performed simultaneously (in parallel) with other steps.

### Industrial Applicability

According to the technology of the present disclosure, even when a head of a listener is closer to one of a left loudspeaker and a right loudspeaker, the listener can still hear all the information of a right channel signal and a left channel signal that are reproduced in accordance with a sound source without the lack of information from the other of the loudspeakers. Thus, it is useful as the technology of reproducing a stereo signal in the proximity of a listener.

## Claims

1. A signal reproduction apparatus, comprising:
a reproduction part that reproduces a right channel signal and a left channel signal in accordance with a sound source;
a first level adjustment part that adjusts a level of the right channel signal reproduced by the reproduction part;
a second level adjustment part that adjusts a level of the left channel signal reproduced by the reproduction part;
an addition part that adds the right channel signal having been adjusted by the first level adjustment part and the left channel signal having been adjusted by the second level adjustment part;
a detection part that detects a position of a head of a listener; and
an input switch part that makes switching of input states to a first loudspeaker arranged near a right ear of the listener and a second loudspeaker arranged near a left ear of the listener according to the position of the head of the listener detected by the detection part between:
a first input state in which the right channel signal is input to the first loudspeaker and the left channel signal is input to the second loudspeaker;
a second input state in which an output signal from the addition part is input to the second loudspeaker and both the right channel signal and the output signal are kept from being input to the first loudspeaker; and
a third input state in which the output signal is input to the first loudspeaker and both the left channel signal and the output signal are kept from being input to the second loudspeaker.

2. The signal reproduction apparatus according to claim 1, wherein
the detection part detects which position among a position between the first loudspeaker and the second loudspeaker, a position closer to the first loudspeaker, and a position closer to the second loudspeaker the head of the lister is at, and
the input switch part switches to:
the first input state when the head of the listener is at the position between the first loudspeaker and the second loudspeaker;
the second input state when the head of the listener is at the position closer to the second loudspeaker; and
the third input state when the head of the listener is at the position closer to the first loudspeaker.

3. The signal reproduction apparatus according to claim 1 or 2, wherein
the first level adjustment part lowers the level of the right channel signal, and
the second level adjustment part lowers the level of the left channel signal.

4. The signal reproduction apparatus according to claim 1 or 2, wherein
the detection part includes:
a first characteristic measurement section that measures a first transmission characteristic from the first loudspeaker to a first microphone arranged near the first loudspeaker using a first reproduced sound signal detected by the first microphone and the right channel signal reproduced by the reproduction part;
a second characteristic measurement section that measures a second transmission characteristic from the second loudspeaker to a second microphone arranged near the second loudspeaker using a second reproduced sound signal detected by the second microphone and the left channel signal reproduced by the reproduction part;
a memory that stores in advance a first transmission characteristic and a second transmission characteristic when the head of the listener is at the position between the first loudspeaker and the second loudspeaker as a first initial transmission characteristic and a second initial transmission characteristic, respectively;
a first difference calculation section that calculates as a first difference characteristic a difference between a first transmission characteristic currently measured by the first characteristic measurement section and the first initial transmission characteristic stored in the memory;
a second difference calculation section that calculates as the second difference characteristic a difference between a second transmission characteristic currently measured by the second characteristic measurement section and the second initial transmission characteristic stored in the memory; and
a determination section that determines a position of the head of the listener on the basis of the first difference characteristic calculated by the first difference calculation section and the second difference characteristic calculated by the second difference calculation section.

5. The signal reproduction apparatus according to claim 1 or 2, wherein
the detection part includes:
a first characteristic measurement section that measures a first transmission characteristic from the first loudspeaker to a first microphone arranged near the first loudspeaker using a first reproduced sound signal detected by the first microphone and the right channel signal reproduced by the reproduction part;
a second characteristic measurement section that measures a second transmission characteristic from the second loudspeaker to a second microphone arranged near the second loudspeaker using a second reproduced sound signal detected by the second microphone and the left channel signal reproduced by the reproduction part;
a memory that stores the first transmission characteristic measured by the first characteristic measurement section and the second transmission characteristic measured by the second characteristic measurement section;
a first difference calculation section that calculates as a first difference characteristic a difference between a first transmission characteristic currently measured by the first characteristic measurement section and a first transmission characteristic previously measured and stored in the memory;
a second difference calculation section that calculates as the second difference characteristic a difference between a second transmission characteristic currently measured by the second characteristic measurement section and a second transmission characteristic previously measured and stored in the memory; and
a determination section that determines a position of the head of the listener on the basis of the first difference characteristic calculated by the first difference calculation section and the second difference characteristic calculated by the second difference calculation section.

6. The signal reproduction apparatus according to claim 5, wherein
the determination section:
detects, when the head of the listener is at the position between the first loudspeaker and the second loudspeaker, a level at each of a plurality of frequency points in a predetermined frequency band for each of the first difference characteristic and the second difference characteristic;
counts the number X of frequency points which have a positive level value and the number Y of frequency points which have a negative level value for each of the first difference characteristic and the second difference characteristic;
determines that the head of the listener has moved from the position between the first loudspeaker and the second loudspeaker to the position closer to the first loudspeaker when the number X of the frequency points for the first difference characteristic is equal to or greater than a first threshold and the number Y of the frequency points for the second difference characteristic is equal to or greater than a second threshold; and
determines that the head of the listener has moved from the position between the first loudspeaker and the second loudspeaker to the position closer to the second loudspeaker when the number X of the frequency points for the second difference characteristic is equal to or greater than the first threshold and the number Y of the frequency points for the first difference characteristic is equal to or greater than the second threshold.

7. The signal reproduction apparatus according to claim 6, wherein
the first threshold is a value obtained by multiplying the number N of whole frequency points in the predetermined frequency band by a constant α,
the second threshold is a value obtained by multiplying the number N of the whole frequency points in the predetermined frequency band by a constant β, and
the constant α is an integer of 0.5 or more and 1 or less, and the constant β is an integer of 0.5 or more and 1 or less.

8. The signal reproduction apparatus according to claim 5, wherein
the determination section:
detects, when the head of the listener is at the position closer to the first loudspeaker, a level at each of a plurality of frequency points in a predetermined frequency band for the first difference characteristic, counts the number Y of frequency points which have a negative level value for the first difference characteristic, and determines that the head of the listener has moved from the position closer to the first loudspeaker to the position between the first loudspeaker and the second loudspeaker when the number Y of the frequency points for the first difference characteristic is equal to or greater than a second threshold, and
detects, when the head of the listener is at the position closer to the second loudspeaker, a level at each of the frequency points in the predetermined frequency band for the second difference characteristic, counts the number Y of frequency points which have a negative level value for the second difference characteristic, and determines that the head of the listener has moved from the position closer to the second loudspeaker to the position between the first loudspeaker and the second loudspeaker when the number Y of the frequency points for the second difference characteristic is equal to or greater than the second threshold.

9. The signal reproduction apparatus according to claim 8, wherein
the second difference calculation section further calculates, when the head of the listener is at the position closer to the first loudspeaker, as the second difference characteristic a difference between the second transmission characteristic currently measured by the second characteristic measurement section and a second transmission characteristic when the head of the listener is at the position between the first loudspeaker and the second loudspeaker,
the determination section further determines, when the head of the listener is at the position closer to the first loudspeaker, whether a level at every frequency for the second difference characteristic is lower than a third threshold, and determines that the head of the listener has moved from the position closer to the first loudspeaker to the position between the first loudspeaker and the second loudspeaker when the number Y of the frequency points for the first difference characteristic is equal to or greater than the second threshold and the level at every frequency for the second difference characteristic is lower than the third threshold,
the first difference calculation section further calculates, when the head of the listener is at the position closer to the second loudspeaker, as the first difference characteristic a difference between the first transmission characteristic currently measured by the first characteristic measurement section and a first transmission characteristic when the head of the listener is at the position between the first loudspeaker and the second loudspeaker, and
the determination section further determines, when the head of the listener is at the position closer to the second loudspeaker, whether a level at every frequency for the first difference characteristic is lower than the third threshold, and determines that the head of the listener has moved from the position closer to the second loudspeaker to the position between the first loudspeaker and the second loudspeaker when the number Y of the frequency points for the second difference characteristic is equal to or greater than the second threshold and the level at every frequency for the first difference characteristic is lower than the third threshold.

10. The signal reproduction apparatus according to claim 1 or 2, wherein
the detection part includes:
an image acquisition section that acquires a photographed image of the head of the listener; and
a determination section that determines a position of the head of the listener by analyzing the image.

11. A signal reproduction method, by a computer, comprising:
reproducing a right channel signal and a left channel signal in accordance with a sound source;
adjusting a level of the reproduced right channel signal;
adjusting a level of the reproduced left channel signal;
adding the right channel signal having the adjusted level and the left channel signal having the adjusted level;
detecting a position of a head of a listener; and
making switching of input states to a first loudspeaker arranged near a right ear of the listener and a second loudspeaker arranged near a left ear of the listener according to the detected position of the head of the listener between: a first input state in which the right channel signal is input to the first loudspeaker and the left channel signal is input to the second loudspeaker; a second input state in which an output signal obtained by the addition is input to the second loudspeaker and both the right channel signal and the output signal are kept from being input to the first loudspeaker; and a third input state in which the output signal is input to the first loudspeaker and both the left channel signal and the output signal are kept from being input to the second loudspeaker.

12. A signal reproduction program causing a computer to function as:
a reproduction part that reproduces a right channel signal and a left channel signal in accordance with a sound source;
a first level adjustment part that adjusts a level of the right channel signal reproduced by the reproduction part;
a second level adjustment part that adjusts a level of the left channel signal reproduced by the reproduction part;
an addition part that adds the right channel signal having been adjusted by the first level adjustment part and the left channel signal having been adjusted by the second level adjustment part;
a detection part that detects a position of a head of a listener; and
an input switch part that makes switching of input states to a first loudspeaker arranged near a right ear of the listener and a second loudspeaker arranged near a left ear of the listener according to the position of the head of the listener detected by the detection part between:
a first input state in which the right channel signal is input to the first loudspeaker and the left channel signal is input to the second loudspeaker;
a second input state in which an output signal from the addition part is input to the second loudspeaker and both the right channel signal and the output signal are kept from being input to the first loudspeaker; and
a third input state in which the output signal is input to the first loudspeaker and both the left channel signal and the output signal are kept from being input to the second loudspeaker.
